# EUROPEAN PATENT SPECIFICATION

(11) **EP 4 382 314 B1**
(45) Date of publication and mention of the grant of the patent: **28.05.2025**
(21) Application number: 23210401.8
(22) Date of filing: 16.11.2023
(51) Int. Cl.: B60C 1/00

(54) **TIRE**
REIFEN
PNEUMATIQUE

(30) Priority: 25.11.2022 JP 2022188522; 25.09.2023 JP 2023160696
(43) Date of publication of application: 12.06.2024
(73) Proprietor: Sumitomo Rubber Industries, Ltd., Kobe-shi, Hyogo 651-0072 (JP)
(72) Inventor: IKAI, Takuma, Kobe-shi, Hyogo 651-0072 (JP)
(74) Representative: Manitz Finsterwald Patent- und Rechtsanwaltspartnerschaft mbB

(56) References cited:
- EP-A1- 3 666 552
- EP-A1- 3 666 553
- EP-A1- 4 032 725
- EP-A1- 4 070 968

## Description

### TECHNICAL FIELD

The present invention relates to a tire.

### BACKGROUND OF THE INVENTION

In a motorcycle tire, since a center part (crown part) of its tread rubber mainly contacts a road surface during straight running, and a shoulder part of the tread rubber mainly contacts the road surface during turning, each of these parts is required to perform depending on its circumstance. Accordingly, in the motorcycle tire, an art using a method of dividing the tread part into a center part and a shoulder part and using different rubber compositions for each tread part is known (for example, JP 2019-127184 A).

However, in a case where different rubber compositions are used for the center part and the shoulder part, stress is concentrated on the interface between them, and there is a concern that a peeling on the interface occurs when a strong force is applied to the tread part particularly during high-speed turning.

### SUMMARY OF THE INVENTION

It is an object of the present invention to provide a tire capable of improving tread's interfacial peeling resistance.

The present invention relates to the following tire:
A tire comprising a tread part,
wherein a tread surface of the tread part comprises a plurality of grooves,
wherein the tread part comprises
a crown part located in the center in a tire width direction, and
a pair of shoulder parts located on outer sides of the crown part in the tire width direction,

wherein each of the crown part and the shoulder parts is composed of a rubber composition comprising a rubber component and a filler,
wherein the rubber composition constituting the crown part comprises 70 parts by mass or more of silica based on 100 parts by mass of the rubber component,
wherein a content of carbon black in the filler contained in the rubber composition constituting the shoulder parts is 50% by mass or more, and
wherein a product of S_{SH}/S_{CR} and G ((S_{SH}/S_{CR})×G) is 15.0 or less, where a toluene swelling ratio of the rubber composition constituting the crown part is referred to as S_{CR}, in %, a toluene swelling ratio of the rubber composition constituting the shoulder parts is referred to as S_{SH}, in %, and a thickness of the tread is referred to as G, in mm.

According to the present invention, interfacial peeling resistance of the tread can be improved.

### BRIEF DESCRIPTION OF THE DRAWINGS

FIG. 1 is one example of a cross-sectional view taken along a plane including a tire rotation axis of a motorcycle tire.
FIG. 2 is one example of a cross-sectional view taken along a plane including a tire rotation axis and showing a state where a motorcycle tire contacts a road surface (in a case where a crown part falls within a ground-contacting surface).
FIG. 3 is one example of a cross-sectional view taken along a plane including a tire rotation axis and showing a state where a motorcycle tire contacts a road surface (in a case where a crown part reaches to an outer side of a ground-contacting surface).
FIG. 4 is one example of a development view of a tread part of a motorcycle tire.
FIG. 5 is a cross-sectional view taken along a Y-Y line of FIG. 4.

### DETAILED DESCRIPTION

The tire that is one embodiment of the present invention is a tire comprising a tread part, wherein a tread surface of the tread part comprises a plurality of grooves, wherein the tread part comprises a crown part located in the center in a tire width direction, and a pair of shoulder parts located on outer sides of the crown part in the tire width direction, wherein each of the crown part and the shoulder parts is composed of a rubber composition comprising a rubber component and a filler, wherein a rubber composition constituting the crown part comprises 70 parts by mass or more of silica based on 100 parts by mass of the rubber component, wherein a content of carbon black in a filler contained in a rubber composition constituting the shoulder parts is 50% by mass or more, and wherein, a product of S_{SH}/S_{CR} and G ((S_{SH}/S_{CR})×G) is 15.0 or less, where a toluene swelling ratio of the rubber composition constituting the crown part is referred to as S_{CR}, in %, a toluene swelling ratio of the rubber composition constituting the shoulder parts is referred to as S_{SH}, in %, and a thickness of the tread is referred to as G, in mm.

A mechanism by which interfacial peeling resistance of the tread is improved in the present invention is considered as follows, although the following consideration is not intended to be bound by any theory.

When a rubber composition constituting a crown part comprises a large amount of silica that is 70 parts by mass, it is considered that the crown part is reinforced and heat generation during a rolling motion can be suppressed. On the other hand, when a content of carbon black in a filler contained in a rubber composition constituting shoulder parts is within a predetermined range, a reinforcing property of the shoulder parts that contact a ground in a cold state is enhanced, and the shoulder parts generate heat when they contact the ground, thereby decreasing a temperature difference from the crown part, so it is considered that stress concentration on interfaces between the crown part and the shoulder parts is suppressed, and that it becomes easy to suppress interfacial peeling.

On the other hand, a toluene swelling ratio is an index indicating a cross-link density of a rubber composition and a smaller value of the toluene swelling ratio indicates a higher cross-link density. Here, the greater a value of a ratio of S_{SH} to S_{CR} (S_{SH}/S_{CR}) is, the relatively weaker a crosslink of molecular chains of the rubber composition constituting the shoulder parts is, which is considered to easily lead to interfacial peeling. For this reason, when a tread thickness is reduced, rigidity and heat accumulation are suppressed, and deformation is suppressed, so that it is considered that peeling can be suppressed. On the other hand, in a case where the tread thickness is large, movement of the entire rubber increases. Accordingly, from the viewpoint of suppressing movement of rubber molecules in the shoulder parts, when a value of S_{SH}/S_{CR} is low, it is considered that it becomes easy to suppress peeling when the shoulder parts contact a ground. For this reason, when the product of S_{SH}/S_{CR} and the thickness G of the tread is equal to or less than a certain value, it is considered that peeling on the interface can be easily suppressed.

As described above, since the reinforcing property on the interfaces between the rubber compositions constituting the crown part and the shoulder parts can be enhanced and deformation and heat accumulation can be suppressed depending on a cross-linking state and the tread thickness, it is considered that interfacial peeling can be easily suppressed.

S_{SH}/S_{CR} is preferably greater than 0.75 and less than 1.40.

When S_{SH}/S_{CR} is within the above-describe range to decrease a difference between S_{SH} and S_{CR}, it is considered that deformation of molecule chains on the tread interface is suppressed, and that it becomes easy to suppress interfacial peeling.

A content of silica based on 100 parts by mass of the rubber component in the rubber composition constituting the crown part is preferably 120 parts by mass or less from the viewpoint of suppressing an increase of a difference in a state of the tread interface.

Each of the rubber composition constituting the crown part and the rubber composition constituting the shoulder parts preferably comprises 2 parts by mass or more and 85 parts by mass or less of a softening agent based on 100% by mass of each rubber component.

When the content of the softening agent is within the above-described range, compatibility of the rubber compositions on the tread interface part with each other is enhanced, and adhesiveness at the interface is improved, so that it is considered that it becomes easy to improve an interfacial peeling resistance effect.

The rubber component contained in the rubber composition constituting the shoulder parts preferably comprises 70% by mass or more of a styrene-butadiene rubber.

When each of the shoulder parts comprises a styrene-butadiene rubber, a styrene part of the styrene-butadiene rubber together with carbon black generates heat when the shoulder parts contact a ground, and it is considered that a difference between temperatures of the crown part and the shoulder parts can be decreased. Furthermore, when each of the shoulder parts comprises a large amount of styrene-butadiene rubber, formation of a phase-separated structure between the styrene-butadiene rubber and another polymer is suppressed, and it is considered that peeling on an inner phase interface can be suppressed.

At least one of the rubber component contained in the rubber composition constituting the crown part and the rubber component contained in the rubber composition constituting the shoulder parts preferably comprises a modified styrene-butadiene rubber.

When the modified styrene-butadiene rubber is compounded, dispersion of a filler in the rubber component is enhanced, Mooney viscosity of the rubber composition is reduced, and affinity of the crown part and the shoulder parts in forming a tire is improved, so that it is considered that an interfacial peeling resistance effect is improved.

When a groove depth of a groove having the maximum groove depth among the plurality of grooves is referred to as D, in mm, a product of S_{SH}/S_{CR} and D ((S_{SH}/S_{CR})×D) is preferably 12.0 or less.

When (S_{SH}/S_{CR})×D is within the above-described range, the greater the groove depth D is, the more the rigidity of the tread part deteriorates, and it is considered that a deformation amount is increased. For this reason, when the product of S_{SH}/S_{CR} and D is less than a predetermined value, both the rigidity and the adhesiveness in the interface are secured, so that it is considered that the interfacial peeling resistance effect is improved.

When a groove width a groove having the maximum groove width among the plurality of grooves is referred to as W, in mm, a ratio of W to S_{SH}/S_{CR} (W/(S_{SH}/S_{CR})) is preferably 2.5 or more.

When W/(S_{SH}/S_{CR}) is within the above-described range and thus the groove has a sufficiently large groove width relative to S_{SH}/S_{CR}, air flows in the groove during a rolling motion even if S_{SH}/S_{CR} is great, thereby improving cooling performance, and thus it is considered that an excessive temperature rise can be suppressed.

When a tan δ at 70°C of the rubber composition constituting the crown part is referred to as 70°C tan δ_{CR} and a tan δ at 70°C of the rubber composition constituting the shoulder parts is referred to as 70°C tan δ_{SH}, 70°C tan δ_{SH}/70°C tan δ_{CR} is preferably greater than 1.0.

When 70°C tan δ_{SH} is greater than 70°C tan δ_{CR}, the shoulder parts warm up promptly as the shoulder parts contact a ground, and followability to a road surface is improved, so that it is considered that stress becomes less likely to be concentrated on the interface.

A product of D and 70°C tan δ_{SH} (D×70°C tan δ_{SH}) is preferably greater than 1.5.

In a case where 70°C tan δ_{SH} becomes less, followability has to be improved by causing the shoulder parts to deform moderately to generate heat when the shoulder parts contact a ground. Accordingly, in the case where 70°C tan δ_{SH} becomes less, it is preferable that the product of these values is increased by making the groove depth deep.

A product of W and 70°C tan δ_{SH} (W×70°C tan δ_{SH}) is preferably greater than 1.0.

In a case where 70°C tan δ_{SH} becomes less, followability has to be improved by causing the shoulder parts to deform moderately to generate heat when the shoulder parts contact a ground. Accordingly, in the case where 70°C tan δ_{SH} becomes less, it is preferable that the product of these values is increased so that the shoulder parts are made to generate heat by causing the groove width wide for the shoulder parts to easily move, to improve followability.

It is preferable that the grooves straddle boundaries between the crown part and the shoulder parts and do not straddle an equatorial line.

In the case where the grooves straddle the boundaries between the crown part and the shoulder parts, and when edges of the grooves deform during running (straight running, braking, etc.), it is considered that it also becomes easy for the shoulder parts to deform in conjunction with the crown part, that temperatures of the shoulder parts are increased, and that followability when the shoulder parts contact a ground is improved. Moreover, when the grooves do not straddle the equatorial line, there is no part located between grooves in a circumferential direction on a tire equatorial line. Accordingly, even if the grooves are provided, circumferential rigidity in the vicinity of the tire equatorial line can be improved, and abrasion of the crown part can be made to progress gradually, so that uneven abrasion is suppressed and it is considered that occurrence of stress concentration in the tread surface can be suppressed.

A tan δ peak temperature T_{CR}, in °C, of the rubber composition constituting the crown part is preferably lower than a tan δ peak temperature T_{SH}, in °C, of the rubber composition constituting the shoulder parts.

This is because, in the case where T_{CR} is higher than T_{SH}, it become easy for the crown part to deform elastically when the crown part contacts a road surface, so that it becomes easy for the rubber to bite into the road surface, and thus improvement of wet grip performance can be expected.

When a complex elastic modulus at 0°C of the rubber composition constituting the crown part is referred to as 0°CE*_{CR}, in MPa, and a complex elastic modulus at 0°C of the rubber composition constituting the shoulder parts is referred to as 0°CE*_{SH}, in MPa, 0°CE*_{SH}/0°CE*_{CR} is preferably less than 2.5.

When 0°CE*_{SH}/0°CE*_{CR} is within the above-described range, it is considered that followability when the crown part contacts a ground is improved.

### [Definition]

A "standardized rim" is a rim, in a standard system including a standard on which the tire is based, defined for each tire by the standard. The standardized rim refers to, for example, a "standard rim" in applicable sizes in JATMA, "Measuring Rim" in ETRTO, or "Design Rim" in TRA. JATMA, ETRTO, and TRA are referred to in this order, and when an applicable size is found during reference to the standard, a standardized rim is based on that standard.

A "standardized internal pressure" is an air pressure, in a standard system including a standard on which the tire is based, defined for each tire by each standard. The standardized internal pressure refers to, for example, the "MAXIMUM AIR PRESSURE" in JATMA, the "maximum value" described in "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard.

A "standardized state" means a state in which a tire is rim-assembled to a standardized rim, filled with air at a standardized internal pressure, and applied with no load. Besides, in the present specification, unless otherwise noted, a size of each part of a tire is measured in the standardized state.

A "standardized load" means a load, in a standard system including a standard on which the tire is based, defined for each tire by each standard. The standardized internal load refers to, for example, the "MAXIMUN LOAD CAPACITY" in JATMA, "LOAD CAPACITY" in ETRTO or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized load is based on that standard.

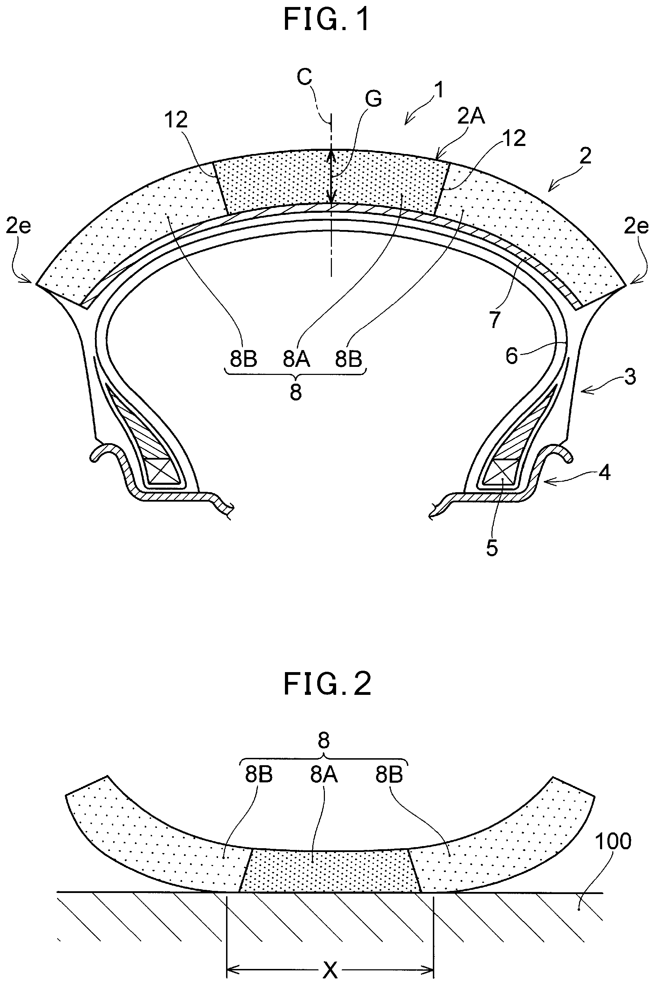

A "thickness G of a tread" refers to a thickness of the entire tread part on a tire equatorial plane on a cross section obtained by cutting a tire along a surface including a tire rotation axis. Besides, an end on the inner side in the tire radial direction in the thickness of the entire tread part is an interface of the rubber composition of the tread part on the inner side in the tire radial direction, and in a case where the tire comprises a belt reinforcement layer, a belt layer, and a carcass layer, among them, the total thickness of the tread part becomes a thickness of the entire rubber layer located on an outer side in the tire radial direction with respect to a layer located on the outermost side in the tire radial direction. Besides, in a case where a circumferential groove is provided on the tire equatorial plane, the thickness of the entire tread is measured with the groove regarded as being filled. The thickness G of the tread is as shown in, for example, FIG. 1.

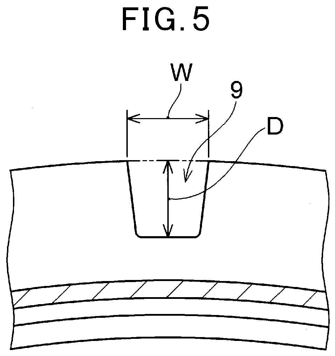

A "groove depth D" is a groove depth, in mm, of a groove having the maximum groove depth among grooves provided for a tread surface. The groove depth means the maximum value of the depths of the grooves. The groove depth D is as shown in, for example, FIG. 5.

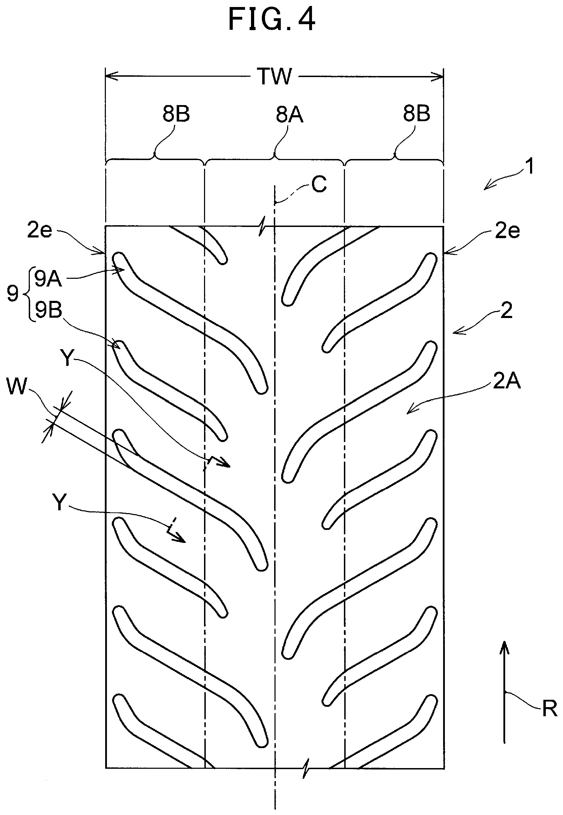

A "groove width W' is a groove width, in mm, on a tread surface, of a groove whose groove width on the tread surface is the widest among the plurality of grooves provided for the tread surface. The groove width means the maximum value of groove widths in a direction perpendicular to a longitudinal direction of the grooves. The groove width W is as shown in, for example, FIGS. 4 and 5.

A "crown part" is a part of a tread part that is located in the center of the tread part, that reaches to an outer side in a tire axial direction with respect to a position within a range of ±5% of a tread width from a tire equatorial line as a center, and that does not reach to tread edges. However, in a case where a current-carrying rubber member is provided, a part of the current-carrying rubber member is excluded from the crown part.

A "shoulder part" is a part of a tread part that is located on an outer side of a crown part in a tire radial direction and that reaches to a tread edge.

A "tread width" is a distance from one tread edge to the other tread edge on a tread surface that is a portion of a tread part contacting a road surface, the tread edge being an outer end in the tire radial direction.

A "current-carrying rubber member" is a member that is embedded in a tread part for the purpose of effectively discharging static electricity occurring during running of a tire into a ground-contacting surface, a part of the member being exposed to the tire ground-contacting surface. Examples of the current-carrying rubber member include one called a base pen.

### <Measuring method>

A "tread thickness" is measured in a state where a width of a bead part and a width of a standardized rim are put together after cutting a tire along a plane including a tire rotation axis.

A "toluene swelling ratio" is calculated by measuring a mass of a vulcanized rubber test piece before and after immersing the vulcanized rubber test piece in toluene at 23°C for 24 hours in accordance with JIS K 6258:2016, using the following equation. It is shown that the less the toluene swelling ratio is, the higher the cross-link density is. (Toluene swelling ratio) = {(Mass after immersion)/(Mass before immersion)}×100

A "70°C tan δ" is a loss tangent measured using a dynamic viscoelasticity measuring device (for example, EPLEXOR series manufactured by gabo Systemtechnik GmbH) under a condition of a temperature at 70°C, a frequency of 10 Hz, an initial strain of 10%, a dynamic strain of ±1%, and an extension mode. A sample for measurement of 70°C tan δ is prepared in the same manner as in the case of 70°CE*. A sample for measurement of 70° tan δ is a vulcanized rubber composition having a length of 20 mm, a width of 4 mm, and a thickness of 1 mm. In a case where a sample is prepared by being cut out of a tire, the sample is cut out of a tread part such that the tire circumferential direction becomes a long side and the tire radial direction becomes a thickness direction.

For a "tan δ peak temperature of a rubber composition", a temperature distribution curve of tan δ in a range from -60°C to 40°C is measured using a dynamic viscoelasticity measuring device (for example, EPLEXOR series manufactured by gabo Systemtechnik GmbH) under a condition of a frequency of 10 Hz, an initial strain of 10%, an amplitude of ±0.5%, and a temperature rising rate of 2°C/min, and the tan δ peak temperature is determined as a temperature corresponding to the largest value of tan δ in the obtained temperature distribution curve. In a case where two points at which tan δ has the largest value exist in the range from -60°C to 40°C, one of the two points that is on the lower temperature side than the other is determined as a tan δ peak temperature. Moreover, in a case where a temperature distribution curve in which tan δ gradually decreases with an increase of temperature is obtained in the range from -60°C to 40°C, the tan δ peak temperature is defined as -60°C from the above-described definition. A sample for measurement of the tan δ peak temperature is prepared in the same manner as in the case of 70°C tan δ.

A "0°CE*" is a complex elastic modulus measured using a dynamic viscoelasticity measuring device (for example, EPLEXOR series manufactured by gabo Systemtechnik GmbH) under a condition of a temperature at 0°C, a frequency of 10 Hz, an initial strain of 10%, a dynamic strain of ±2.5%, and an extension mode. A sample for measurement of 0°CE* is prepared in the same manner as in the case of 70°C tan δ.

A "styrene content" is a value calculated by ¹H-NMR measurement and is applied to a rubber component (styrene unit-comprising rubber) having a repeating unit derived from styrene such as, for example, a SBR and the like.

A "vinyl content (1,2-bond butadiene unit amount)" is a value calculated in accordance with JIS K 6239-2:2017 by an infrared absorption spectrometry and is applied to a rubber component having a repeating unit derived from butadiene such as, for example, a SBR, a BR, and the like.

A "cis content (cis-1,4-bond butadiene unit amount)" is a value calculated in accordance with JIS K 6239-2:2017 by the infrared absorption spectrometry and is applied to a rubber component having a repeating unit derived from butadiene such as, for example, a BR and the like.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, SBR, BR, a softening agent, and the like.

A "nitrogen adsorption specific surface area (N₂SA) of carbon black" is measured according to JIS K 6217-2:2017. A "nitrogen adsorption specific surface area (N₂SA) of silica" is measured by a BET method according to ASTM D3037-93.

A "softening point of a resin component" is a temperature at which a sphere drops when the softening point specified in JIS K 6220-1: 2001 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only.

### [Tire]

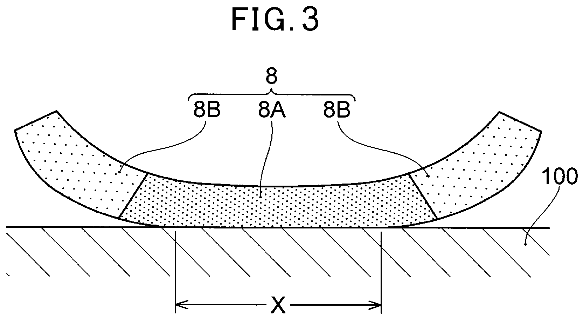

Hereinafter, one embodiment of the present invention will be appropriately described based on the drawings. FIG. 1 is one example of a cross-sectional view taken along a plane including a tire rotational axis (also referred to as a "tire axis") of a motorcycle tire (however, indication of grooves provided on a tread surface is omitted, and the same applies to FIGS. 2 and 3). A tire 1 comprises a carcass 6 extending from a tread part 2 through a sidewall part 3 to a bead core 5 of a bead part 4, and a belt layer 7 arranged on an outer side of the carcass 6 in a tire radial direction and inside the tread part 2. On the above-described cross section, a tread surface 2A of the tread part 2 contacting a road surface is convex and extends in an arc shape with bended outward in the tire radial direction. Moreover, outer edges of tread surface 2A in a tire axial direction are tread edges 2e.

In the tire according to the present embodiment, the tread part comprises a crown part 8A located in a center in the tire axial direction, and a pair of shoulder parts 8B located on outer sides of the crown part 8A. Moreover, each of the pair of shoulder parts 8B may be further divided. Moreover, the crown part 8A may be further divided.

In the present embodiment, the crown part and the shoulder parts satisfy a predetermined relationship. In a case where at least one of the crown part and the shoulder parts is divided, in each of regions on the outer side in the tire axial direction with respect to a position within a range of ±5% of a tread width from the tire equatorial line as a center, at least one pair of two parts adjacent to each other may satisfy a predetermined relationship that should be satisfied by the crown part according to the present invention and the shoulder parts according to the present invention.

That is, in the region on the outer side in the tire axial direction with respect to a position within a range of +5% of a tread width from a tire equatorial line as a center, at least one pair of two parts adjacent to each other may satisfy the predetermined relationship that should be satisfied by the crown part according to the present invention and the shoulder parts according to the present invention, and, in the opposite-side region on the outer side in the tire axial direction with respect to a position within a range of -5% of a tread width from a tire equatorial line as a center, at least one pair of two parts adjacent to each other may satisfy the predetermined relationship that should be satisfied by the crown part according to the present invention and the shoulder parts according to the present invention. In this case, among these two parts adjacent to each other, a part on an inner side in the tire axial direction is a crown part according to the present embodiment, and a part on the outer side in the tire axial direction is a shoulder part according to the present embodiment.

In the present embodiment, in a case where at least one of the crown part 8A and the shoulder parts 8B is divided, all the crown parts and all the shoulder parts preferably satisfy the predetermined relationship that should be satisfied by the crown part according to the present invention and the shoulder parts according to the present invention.

A maximum length of a curve length of the surface of the tread part of the crown part 8A in its width direction is preferably 20% or more, more preferably 25% or more, further preferably 33% or more of a curve length TW of the entire tread part 2 in its width direction from the viewpoint of abrasion resistance. Moreover, the curve length of the surface of the tread part of the crown part 8A in its width direction is preferably 70% or less, more preferably 60% or less, further preferably 55% or less of a curve length TW of the entire tread part in its width direction from the viewpoint of wet grip.

The tread part 2 is provided with a tread rubber 8, wherein the tread rubber 8 is arranged on an outer side of the belt layer 7 in the radial direction. In the present embodiment, the tread rubber 8 occupies a space from an outer surface of the belt layer 7 to the tread surface 2A. The tread rubber 8 is composed of the crown 8A with the tire equatorial line C centered thereon, and the pair of shoulder parts 8B adjacent to the crown part 8A and extending up to the tread edges 2e. That is, two types of members that are the crown part 8A and the shoulder part 8B are arranged alongside from the vicinity of the tire equatorial line C toward the both sides in the tire radial direction. Besides, although the tread rubber is divided into the crown part 8A and the shoulder parts 8B by normal lines 12 drawn from the tread surface 2A in FIG. 1, for example, the tread rubber may be divided into the crown part 8A and the shoulder part 8B by borderlines inwardly or outwardly inclining in the tire axial direction from the tread surface 2A toward the belt layer 7, and a mode of the division is not limited.

As shown in FIG. 2, dividing positions at which the tread rubber is divided into the crown part 8A and the shoulder parts 8B (borderlines) may be inside a width X of a ground-contacting surface (a part of the tread rubber 8 contacting a road surface 100 in a state where a tire is filled with air at a standardized internal pressure and applied with a standardized load) or may be outside the width X (see FIG. 3). The state shown in FIG. 2 is referred to as a state "within a grounding surface", and the state shown in FIG. 3 is referred to as a state "outside a grounding surface". The dividing positions are preferably outside the width X from the viewpoint of prevention of stepped abrasion caused by a difference in abrasion resistance of compounding of the tread.

Grooves 9 provided on the tread surface 2A of the tire according to the present embodiment are preferably grooves straddling boundaries between the crown part 8A and the shoulder parts 8B. Due to these grooves, stress occurs not only on an interface but also in groove parts in the tread according to the present embodiment. Accordingly, in the case where the grooves straddle interfaces between the crown part and the shoulder parts, and when the edges of the grooves deform during running (straight running, braking, etc.), it is considered that it also becomes easy for the shoulder parts to deform in conjunction with the crown part, that temperatures of the shoulder parts are increased, and that followability when the shoulder parts contact a ground is improved. Here, although the term "grooves straddle interfaces" is intended to mean that the grooves simply have only to straddle the interfaces and is not intended for a further limitation, the grooves are intended to prevent stress concentration on the interfaces, and thus it is preferable that the grooves not only straddle an interface but also extend to the both sides of the interface. Besides, in a case where a shoulder part is further divided, the grooves preferably straddle interfaces caused by the division as well.

It is preferable that the grooves 9 provided on the tread surface 2A of the tire according to the present embodiment do not straddle the tire equatorial line C. When the grooves do not straddle the equatorial line, there is no part located between grooves in a circumferential direction on the equatorial line, so that the rigidity in the circumferential direction in the vicinity of the tire equatorial line can be improved while providing the grooves, and abrasion of the crown part can be made to progress gradually. Accordingly, it is considered that uneven abrasion of the tread is suppressed, and occurrence of stress concentration in the tread surface can be suppressed.

Although FIG. 4 is one example of a development view of the tread part 2 of the tire 1 according to the present embodiment, the present invention is not limited to such an aspect. In FIG. 4, grooves 9 are provided which straddle boundaries between the crown part 8A and the shoulder parts B of the tread part 2 and do not straddle the equatorial line. Here, the symbol R in FIG. 4 indicates a tire rotation direction. In FIG. 4, the grooves consist of main grooves 9A and sub grooves 9B shorter than the main grooves. Moreover, the main grooves 9A and the sub grooves 9B are provided alternatingly in the tire circumferential direction and provided to form a symmetric pattern with respect to the tire equatorial line C.

A thickness G of the tread part 2 is, but not particularly limited to, preferably 18 mm or less, more preferably 16 mm or less, further preferably 14 mm or less, particularly preferably 12 mm or less. On the other hand, G is preferably 4.0 mm or more, more preferably 6.0 mm or more, further preferably 8.0 mm or more.

A groove depth D is, but not particularly limited to, preferably 4.0 mm or more, more preferably 5.0 mm or more, further preferably 6.0 mm or more, particularly preferably 7.0 mm or more. On the other hand, D is preferably 16 mm or less, more preferably 14 mm or less, further preferably 12 mm or less, particularly preferably 10 mm or less.

A groove width W is, but not particularly limited to, preferably 3.0 mm or more, more preferably 3.3 mm or more, further preferably 3.5 mm or more. On the other hand, W is preferably 6.0 mm or less, more preferably 5.5 mm or less, further preferably 5.0 mm or less.

In the present embodiment, a toluene swelling ratio is an index regarding a cross-link density of a rubber composition. The toluene swelling ratio can be appropriately adjusted depending on types or compounding amounts of a rubber component, a vulcanizing agent, a vulcanization accelerator, and the like which are described below. For example, when a content of a vulcanizing agent or a vulcanization accelerator is increased, the cross-link density of the rubber composition tends to be increased, and the toluene swelling ratio tends to be decreased. Besides, the toluene swelling ratio is measured by the above-described method.

A toluene swelling ratio S_{CR} of a rubber composition constituting the crown part is preferably 200% or more, more preferably 210% or more, further preferably 220% or more, particularly preferably 230% or more. On the other hand, S_{CR} is preferably 350% or less, more preferably 330% or less, further preferably 310% or less, particularly preferably 290% or less, from the viewpoint of ride comfort.

A toluene swelling ratio S_{SH} of a rubber composition constituting the shoulder parts is preferably 220% or more, more preferably 230% or more, further preferably 240% or more, particularly preferably 250% or more. On the other hand, S_{SH} is preferably 350% or less, more preferably 340% or less, further preferably 330% or less, particularly preferably 320% or less.

S_{SH}/S_{CR} is preferably greater than 0.75, more preferably greater than 0.80, further preferably greater than 0.85, particularly preferably greater than 0.90. Moreover, S_{SH}/S_{CR} is preferably less than 1.40, more preferably less than 1.35, further preferably less than 1.30. When S_{SH}/S_{CR} is within the above-described ranges and thus a difference between S_{SH} and S_{CR} is decreased, deformation of molecular chains on a tread interface is suppressed, and it is considered that it becomes easy to suppress interfacial peeling.

(S_{SH} S_{CR})×G is 15.0 or less, preferably 14.8 or less, more preferably 14.6 or less, further preferably 14.4 or less, particularly preferably 14.2 or less, from the viewpoint of effects of the present invention. On the other hand, a lower limit value of (S_{SH}/S_{CR})×G is, but not particularly limited to, preferably 4.0 or more, more preferably 5.0 or more, further preferably 6.0 or more, further preferably 7.0 or more, particularly preferably 8.0 or more.

(S_{SH}/S_{CR})×D is preferably 12.0 or less, more preferably 11.5 or less, further preferably 11.0 or less. When (S_{SH}/S_{CR})×D is within the above-described ranges, the greater the groove depth D is, the more the rigidity of the tread part deteriorates, and it is considered that a deformation amount is increased. When the product of (S_{SH}/S_{CR}) and D is less than a predetermined value, both the rigidity and the adhesiveness in an interface are secured, and thus it is considered that an interfacial peeling resistance effect is improved. On the other hand, a lower limit value of (S_{SH}/S_{CR})×D is, but not particularly limited to, preferably 3.0 or more, more preferably 4.0 or more, further preferably 5.0 or more, particularly preferably 6.0 or more.

W/(S_{SH}/S_{CR}) is preferably 2.2 or more, more preferably 2.5 or more, further preferably 2.8 or more. When W/(S_{SH}/S_{CR}) is within the above-described ranges and the groove width is sufficiently large relative to S_{SH}/S_{CR}, air flows in the grooves during a rolling motion even if S_{SH}/S_{CR} is large, thereby improving cooling performance, and thus it is considered that an excessive temperature rise can be suppressed. On the other hand, an upper limit value of W/(S_{SH}/S_{CR}) is, but not particularly limited to, preferably 10.0 or less, more preferably 8.0 or less, further preferably 6.0 or less, particularly preferably 5.5 or less.

In the present embodiment, 70°C tan δ is an index regarding heat generation of a rubber composition during running on a dry road surface. 70°C tan δ can be appropriately adjusted depending on types and compounding amounts of a rubber component, a filler, a softening agent, a vulcanizing agent, a vulcanization accelerator, and the like which are described below. For example, when a content or a nitrogen adsorption specific surface area (N₂SA) of a filler (carbon black, silica, etc.) is increased, 70°C tan δ tends to be increased. Besides, 70°C tan δ is measured by the above-described method.

A tan δ at 70°C of the rubber composition constituting the crown part (70°C tan δ_{CR}) is preferably 0.35 or less, more preferably 0.30 or less, further preferably 0.28 or less, further preferably 0.26 or less, further preferably 0.24 or less, further preferably 0.22 or less, particularly preferably 0.20 or less. On the other hand, 70°C tan δ_{CR} is preferably 0.05 or more, more preferably 0.07 or more, further preferably 0.09 or more.

A tan δ at 70°C of the rubber composition constituting the shoulder parts (70°C tan δ_{SH}) is preferably 0.40 or less, more preferably 0.35 or less, further preferably 0.32 or less, further preferably 0.30 or less, particularly preferably 0.28 or less. On the other hand, 70°C tan δ_{SH} is preferably 0.09 or more, more preferably 0.11 or more, further preferably 0.13 or more.

70°C tan δ_{SH}/70°C tan δ_{CR} is preferably greater than 0.9, more preferably greater than 1.0, further preferably greater than 1.1, particularly preferably greater than 1.2. When 70°C tan δ_{SH}/70°C tan δ_{CR} is within the above-described ranges, the shoulder parts warm up promptly as the shoulder parts contact a ground, and followability to a road surface is improved, so that it is considered that stress becomes less likely to be concentrated on the interface. On the other hand, an upper limit value of 70°C tan δ_{SH}/70°C tan δ_{CR} is, but not particularly limited to, preferably less than 2.5, more preferably less than 2.3, further preferably less than 2.1.

D×70°C tan δ_{SH} is preferably greater than 1.5, more preferably greater than 1.6, further preferably greater than 1.7, particularly preferably greater than 1.8, from the viewpoint of the effects of the present invention. On the other hand, an upper limit value of D×70°C tan δ_{SH} is, but not particularly limited to, preferably less than 3.0, more preferably less than 2.8, further preferably less than 2.6.

W×70°C tan δ_{SH} is preferably greater than 1.0, more preferably greater than 1.1, from the viewpoint of the effects of the present invention. On the other hand, an upper limit value of W×70°C tan δ_{SH} is, but not particularly limited to, preferably less than 1.5, more preferably less than 1.4.

In the present embodiment, a tan δ peal temperature T_{CR}, in °C, of the rubber composition constituting the crown part is preferably lower than a tan δ peal temperature T_{SH}, in °C, of the rubber composition constituting the shoulder parts. This is because it becomes easy for the crown part to deform elastically when the crown part contacts a road surface, so that it becomes easy for the rubber to bite into a road surface, and thus improvement of wet grip performance can be expected. Besides, the tan δ peak temperatures of the rubber compositions can be appropriately adjusted depending on types and compounding amounts of a rubber component, a softening agent, and the like.

T_{CR} is preferably -40°C or higher, more preferably -35°C or higher, further preferably -30°C or higher. Moreover, on the other hand, T_{CR} is preferably 10°C or lower, more preferably 5°C or lower, further preferably 0°C or lower, particularly -5°C or lower.

T_{SH} is preferably -35°C or higher, more preferably -30°C or higher, further preferably -25°C or higher. Moreover, on the other hand, T_{SH} is preferably 10°C or lower, more preferably 5°C or lower, further preferably 0°C or lower, particularly -5°C or lower.

A complex elastic modulus at 0°C of the rubber composition constituting the crown part (0°CE*_{CR}) is preferably 10 MPa or more, more preferably 12 MPa or more, further preferably 14 MPa or more, particularly preferably 16 MPa or more, from the viewpoint that a restoring force is exerted with respect to deformation to improve responsiveness. On the other hand, 0°CE*_{CR} is preferably 80 MPa or less, more preferably 70 MPa or less, further preferably 60 MPa or less, particularly preferably 55 MPa or less, from the viewpoint of ride comfort.

A complex elastic modulus at 0°C of the rubber composition constituting the shoulder parts (0°CE*_{SH}) is preferably 10 MPa or more, more preferably 12 MPa or more, further preferably 14 MPa or more, particularly preferably 16 MPa or more, from the viewpoint that a restoring force is exerted with respect to deformation to improve responsiveness. On the other hand, 0°CE*_{SH} is preferably 80 MPa or less, more preferably 70 MPa or less, further preferably 60 MPa or less, particularly preferably 55 MPa or less, from the viewpoint of ride comfort.

0°CE*_{SH}/0°CE*_{CR} is preferably less than 3.0, more preferably less than 2.8, further preferably less than 2.6, particularly preferably less than 2.5. When 0°CE*_{SH}/0°CE*_{CR} is within the above-described ranges, it is considered that followability when the crown part contacts a ground is improved. Moreover, 0°CE*_{SH}/0°CE*_{CR} is preferably greater than 0.4, more preferably greater than 0.5, further preferably greater than 0.6, particularly preferably greater than 0.7. Besides, 0°CE* of the rubber compositions can be appropriately adjusted depending on types and compounding amounts of a rubber component, a softening agent, and the like.

### [Rubber composition]

All of the rubber compositions constituting the crown part and the shoulder parts can be produced with raw materials described below depending on a toluene swelling ratio, 70°C tan δ, a tan δ peak temperature, 0°CE*, etc., as required. The rubber composition according to the present embodiment will be described below, though the description shall be applicable to all of the rubber compositions constituting the crown part and the rubber composition constituting the shoulder parts, unless otherwise noted.

### <Rubber component>

For the rubber composition according to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These rubber components may be used alone, or two or more thereof may be used in combination.

The diene-based rubber component preferably comprises at least one selected from the group consisting of an isoprene-based rubber, a styrene-butadiene rubber (SBR), and a butadiene rubber (BR) and more preferably comprises an SBR.

A content of the diene-based rubber in the rubber component is preferably 70% by mass or more, more preferably 80% by mass or more, further preferably 90% by mass or more, particularly preferably 95% by mass or more. Moreover, a rubber component consisting of a diene-based rubber may be used.

### (SBR)

The SBR is not particularly limited, examples of which include a non-modified solution-polymerized SBR (S-SBR), a non-modified emulsion-polymerized SBR (E-SBR), modified SBRs (a modified S-SBR, a modified E-SBR) thereof, and the like. Examples of the modified SBR include a SBR modified at its terminal and/or main chain using a compound having a functional group described below (a modifying agent); a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. These SBRs may be used alone, or two or more thereof may be used in combination.

The functional group that the modifying agent has is preferably a functional group including at least one element selected from the group consisting of silicon, nitrogen, and oxygen. Examples of such a functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like, and an amino group and /or alkoxysilyl group are preferable. The amino group is preferably an amino group that is substituted with one or two alkyl groups having 1 to 6 carbon atoms. Specific examples of alkoxysilyl include, for example, trimethoxysilyl, triethoxysilyl, triisopropoxysilyl, dimethoxymethylsilyl, diethoxymethylsilyl, dimethylmethoxysilyl, dimethylethoxysilyl, and the like.

An oil-extended SBR or a non-oil extended SBR can be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

As the SBR that can be used in the present embodiment, those commercially available from JSR Corporation, Sumitomo Chemical Co., Ltd., Ube Industries, Ltd., Asahi Kasei Corporation, ZS Elastomer Co., Ltd., etc. can be used.

A styrene content of the SBR is preferably 10% by mass or more, more preferably 15% by mass or more, further preferably 20% by mass or more, from the viewpoint of the effects of the present invention. Moreover, the styrene content is preferably 60% by mass or less, more preferably 55% by mass or less, further preferably 50% by mass or less. Besides, the styrene content of the SBR is calculated by the above-described measuring method.

A vinyl content of the SBR is preferably 10 mol% or more, more preferably 20 mol% or more, further preferably 30 mol% or more, from the viewpoint of the effects of the present invention. Moreover, the vinyl content is preferably 80 mol% or less, more preferably 70 mol% or less, further preferably 60 mol% or less, further preferably 50 mol% or less. Besides, the vinyl content of the SBR is measured by the above-described method.

A weight-average molecular weight (Mw) of the SBR is preferably 200,000 or more, more preferably 250,000 or more, further preferably 300,000 or more, from the viewpoint of wet grip performance. Moreover, the Mw of the SBR is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR in the rubber component contained in the rubber composition constituting the crown part is preferably 50% by mass or more, more preferably 60% by mass or more, further preferably 70% by mass or more, particularly preferably 75% by mass or more, from the viewpoint of the effects of the present invention. On the other hand, an upper limit value of the content is not particularly limited.

A content of the SBR in the rubber component contained in the rubber composition constituting the shoulder parts is preferably 50% by mass or more, more preferably 60% by mass or more, further preferably 70% by mass or more, particularly preferably 75% by mass or more, from the viewpoint of the effects of the present invention. On the other hand, an upper limit value of the content is not particularly limited.

### (BR)

The BR is not particularly limited, and those common in the tire industry can be used, such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available from Zeon Corporation, Ube Industries, Ltd., JSR Corporation, etc. can be used. When the rubber composition comprises the high cis BR, a low temperature property and abrasion resistance can be improved. A cis content of the high cis BR is preferably 95% by mass or more, more preferably 96% by mass or more, further preferably 97% by mass or more. Besides, the cis content of the BR is measured by the above-described measuring method.

As the modified BR, a modified butadiene rubber (modified BR) is appropriately used, whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of which is further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the Mw of the BR is measured by the above-described measuring method.

A content of the BR in the rubber component is preferably 50% by mass or less, more preferably 45% by mass or less, further preferably 40% by mass or less, further preferably 35% by mass or less, particularly preferably 30% by mass or less, from the viewpoint of the effects of the present invention. Moreover, a lower limit value of the content can be, but not particularly limited to, for example, 1% by mass or more, 3% by mass or more, 5% by mass or more, 10% by mass or more, or 15% by mass or more.

### (Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 30% by mass or less, more preferably 20% by mass or less, further preferably 10% by mass or less, particularly preferably 5% by mass or less, from the viewpoint of the effects of the present invention. Moreover, a lower limit value of the content is not particularly limited.

### (Other rubber components)

The rubber component may also comprise other rubber components than the diene-based rubbers to an extent so as not to affect the effects of the present invention. As the other rubber components than the diene-based rubbers, a cross-linkable rubber component commonly used in the tire industry can be used, examples of which include, for example, non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, the rubber component may or may not comprise a known thermoplastic elastomer in addition to the above-described rubber components.

### <Filler>

For the rubber composition according to the present embodiment, a filler comprising carbon black and/or silica is appropriately used. The rubber composition constituting the crown part comprises silica as a filler and preferably comprises carbon black and silica. The rubber composition constituting the shoulder parts comprises carbon black as a filler.

A nitrogen adsorption specific surface area (N₂SA) of the carbon black is preferably 50 m²/g or more, more preferably 70 m²/g or more, further preferably 90 m²/g or more, particularly preferably 110 m²/g or more, from the viewpoint of reinforcing property. Moreover, it is preferably 200 m²/g or less, more preferably 180 m²/g or less, further preferably 160 m²/g or less, from the viewpoints of fuel efficiency and processability. Besides, the N₂SA of the carbon black is measured by the above-described measuring method.

A content of the carbon black based on 100 parts by mass of the rubber component of the rubber composition constituting the crown part is preferably 1 parts by mass or more, more preferably 3 parts by mass or more, further preferably 5 parts by mass or more, particularly preferably 7 parts by mass or more, from the viewpoint of the effects of the present invention. Moreover, the content is preferably 30 parts by mass or less, more preferably 20 parts by mass or less, further preferably 15 parts by mass or less, particularly preferably 12 parts by mass or less.

A content of the carbon black based on 100 parts by mass of the rubber component of the rubber composition constituting the shoulder parts is preferably 20 parts by mass or more, more preferably 30 parts by mass or more, further preferably 40 parts by mass or more, particularly preferably 50 parts by mass or more, from the viewpoint of the effects of the present invention. Moreover, it is preferably 130 parts by mass or less, more preferably 120 parts by mass or less, further preferably 110 parts by mass or less, particularly preferably 100 parts by mass or less, from the viewpoint of fuel efficiency.

### (Silica)

Silica is not particularly limited, and for example, those common in the tire industry can be used, such as silica prepared by a dry process (anhydrous silica), silica prepared by a wet process (hydrous silica), and the like. Among them, hydrous silica prepared by a wet process is preferable from the reason that it has many silanol groups. The silica may be used alone, or two or more thereof may be used in combination.

A nitrogen adsorption specific surface area (N₂SA) of the silica is preferably 110 m²/g or more, more preferably 130 m²/g or more, further preferably 150 m²/g or more, particularly preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of the silica is measured by the above-described measuring method.

A content of the silica based on 100 parts by mass of the rubber component in the rubber composition constituting the crown part is 70 parts by mass or more, preferably 75 parts by mass or more, more preferably 80 parts by mass or more, further preferably 90 parts by mass or more, particularly preferably 100 parts by mass or more. Moreover, the content is preferably 140 parts by mass or less, more preferably 130 parts by mass or less, further preferably 120 parts by mass or less. When the content is within the above-described ranges, the rubber compositions are reinforced while suppressing heat generation during straight running, and it is considered that it becomes easy to secure strength on the interfaces.

A content of the silica based on 100 parts by mass of the rubber component in the rubber composition constituting the shoulder parts is preferably 40 parts by mass or less, more preferably 30 parts by mass or less, further preferably 20 parts by mass or less, particularly preferably 10 parts by mass or less. Moreover, a lower limit value of the content can be, but not particularly limited to, for example, 1 parts by mass or more, 3 parts by mass or more, or 5 parts by mass or more.

A total content of fillers based on 100 parts by mass of the rubber component in the rubber composition constituting the crown part is preferably 75 parts by mass or more, more preferably 80 parts by mass or more, further preferably 85 parts by mass or more, from the viewpoint of the effects of the present invention. Moreover, it is preferably 150 parts by mass or less, more preferably 140 parts by mass or less, further preferably 130 parts by mass or less, from the viewpoints of fuel efficiency and elongation at break.

A total content of fillers based on 100 parts by mass of the rubber component in the rubber composition constituting the shoulder parts is preferably 50 parts by mass or more, more preferably 60 parts by mass or more, further preferably 70 parts by mass or more, particularly preferably 75 parts by mass or more, from the viewpoint of the effects of the present invention. Moreover, it is preferably 150 parts by mass or less, more preferably 130 parts by mass or less, further preferably 110 parts by mass or less, from the viewpoints of fuel efficiency and elongation at break.

A content of the silica in the filler contained in the rubber composition constituting the crown part is preferably 60% by mass or more, more preferably 70% by mass or more, further preferably 80% by mass or more, particularly preferably 85% by mass or more, from the viewpoint of the effects of the present invention. On the other hand, an upper limit value of the content is, but not particularly limited to, preferably 99% by mass or less, more preferably 95% by mass or less.

A content of the carbon black in the filler contained in the rubber composition constituting the shoulder parts is 50% by mass or more, preferably 60% by mass or more, more preferably 70% by mass or more, further preferably 80% by mass or more, particularly preferably 85% by mass or more. When the content is within the above-described ranges, reinforcing property of the shoulder parts that contact a ground in a cold state is enhanced, and it becomes easy to suppress peeling. On the other hand, an upper limit value of the content is not particularly limited.

### (Other fillers)

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

### (Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Degussa GmbH, Momentive Performance Materials, etc. can be used. These silane coupling agents may be used alone, or two or more thereof may be used in combination.

A content of the silane coupling agent based on 100 parts by mass of the silica is preferably 1.0 parts by mass or more, more preferably 3.0 parts by mass or more, further preferably 5.0 parts by mass or more, from the viewpoint of enhancing dispersibility of the silica. Moreover, it is preferably 20 parts by mass or less, more preferably 15 parts by mass or less, further preferably 12 parts by mass or less, from the viewpoints of cost and processability.

### <Other compounding agents>

The rubber composition according to the present embodiment can appropriately comprise compounding agents conventionally and commonly used in the tire industry, such as, for example, a softening agent, wax, processing aid, stearic acid, zinc oxide, an antioxidant, a vulcanizing agent, a vulcanization accelerator, and the like, in addition to the above-described components.

### (Softening agent)

The rubber composition according to the present embodiment preferably comprises a softening agent. Examples of the softening agent include, for example, a resin component, oil, a liquid rubber, and the like.

Examples of the resin component include, but not particularly limited to, hydrocarbon resins such as a petroleum resin, a terpene-based resin, a rosin-based resin, a phenol-based resin, and the like, which are commonly used in the tire industry.

Examples of the petroleum resin include a C5-based petroleum resin, an aromatic petroleum resin, a C5-C9-based petroleum resin, and the like.

In the present specification, the "C5-based petroleum resin" means a resin obtained by polymerizing C5 fractions and may be those undergoing hydrogeneration or modification. Examples of C5 fractions include, for example, petroleum fractions having 4 to 5 carbon atoms, such as cyclopentadiene, pentene, pentadiene, isoprene, and the like. Dicyclopentadiene resin (DCPD resin) is appropriately used as a C5-based petroleum resin.

In the present specification, the "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As a specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" means a resin obtained by copolymerizing the C5 fractions and the C9 fractions and may be those undergoing hydrogeneration or modification. Examples of the C5 fractions and the C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, dipentene, and the like; an aromatic modified terpene resin made from a terpene compound as described above and an aromatic compound; a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol, and the like.

Examples of the rosin-based resin include, but not particularly limited to, for example, a natural resin rosin, a rosin-modified resin obtained by modifying it by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A softening point of the resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of the rubber component with the filler. Besides, the softening point of the resin component is measured by the above-described measuring method.

A content of the resin component when compounded based on 100 parts by mass of the rubber component is preferably 1 parts by mass or more, more preferably 3 parts by mass or more, further preferably 5 parts by mass or more, particularly preferably 7 parts by mass or more. Moreover, the content of the resin component is preferably 50 parts by mass or less, more preferably 40 parts by mass or less, further preferably 30 parts by mass or less.

Examples of oil include, for example, process oils, vegetable oils and fats, animal oils and fats, and the like. Examples of the process oils include paraffinic process oils (mineral oils), naphthenic process oils, aromatic process oils, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, process oils each having a low content of a polycyclic aromatic compound (PCA) can also be used. Examples of the process oils each having a low content of a PCA include MES, TDAE, heavy naphthenic oil, and the like. Moreover, from the viewpoint of a life cycle assessment, one obtained by refining a waste oil after use for a rubber mixing machine or an engine or waste cooking oil used in a cooking facility may be used.

A content of the oil when compounded based on 100 parts by mass of the rubber component is preferably 5 parts by mass or more, more preferably 10 parts by mass or more, further preferably 20 parts by mass or more, particularly preferably 30 parts by mass or more. Moreover, the content is preferably 100 parts by mass or less, more preferably 90 parts by mass or less, further preferably 80 parts by mass or less.

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 parts by mass or more, more preferably 3 parts by mass or more, further preferably 5 parts by mass or more. Moreover, the content of the rubber component is preferably 50 parts by mass or less, more preferably 40 parts by mass or less, further preferably 30 parts by mass or less.

A content of the softening agent based on 100 parts by mass of the rubber component (a total amount of all of a plurality of softening agents when used in combination) is preferably 2 parts by mass or more, more preferably 10 parts by mass or more, further preferably 20 parts by mass or more, further preferably 30 parts by mass or more, particularly preferably 40 parts by mass or more. Moreover, the content is preferably 120 parts by mass or less, more preferably 100 parts by mass or less, further preferably 90 parts by mass or less, particularly preferably 85 parts by mass or less.

The wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, specially selected waxes thereof, and the like. Among them, the paraffin wax is preferable. Besides, the wax according to the present embodiment shall not include stearic acid. As a wax, for example, those commercially available from Ouchi Shinko Chemical Industry Co., Nippon Seiro Co., Ltd., PARAMELT, etc. can be used. These waxes may be used alone, or two or more thereof may be used in combination.

A content of the wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of the processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of the processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of the stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of the zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, particularly preferably 0.7 parts by mass or more, although the content can be appropriately selected in accordance with a required toluene swelling ratio. Moreover, it is preferably 5.0 parts by mass or less, more preferably 4.0 parts by mass or less, further preferably 3.0 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of the sulfenamide-based vulcanization accelerator, the thiazole-based vulcanization accelerator, and the guanidine-based vulcanization accelerator are preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, DPG is preferable.

A content of the vulcanization accelerator when compounded based on 100 parts by mass of the rubber component (a total amount of all of a plurality of vulcanization accelerators when used in combination) is preferably 0.5 parts by mass or more, more preferably 0.7 parts by mass or more, further preferably 0.9 parts by mass or more, although the content can be appropriately selected in accordance with a required toluene swelling ratio. Moreover, the content is preferably 9.0 parts by mass or less, more preferably 7.0 parts by mass or less, further preferably 5.0 parts by mass or less.

### [Production of rubber composition and tire]

The rubber composition according to the present embodiment can be produced by a known method. For example, it can be produced by kneading the above-described components with a rubber kneading machine such as an open roll, a sealed type kneader (a Banbury mixer, a kneader, and the like), and the like.

A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of a kneading condition include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of a vulcanization condition include, but not particularly limited to, for example, a method of vulcanizing at 150°C to 200°C for 10 to 30 minutes.

The tire comprising the tread that comprises the crown part and the shoulder parts can be produced with the corresponding rubber compositions, respectively, by a usual method. That is, an unvulcanized tire is formed by extruding each of unvulcanized rubber compositions obtained by the above-described method and corresponding to the crown part and the shoulder part into each shape with an extruder equipped with a mouthpiece having a predetermined shape, attaching it together with other tire members on a tire forming machine, and molding them by a usual method. The tire according to the present embodiment can be produced by heating and pressurizing this unvulcanized tire in a vulcanizing machine. Examples of the vulcanization condition include, but not particularly limited to, for example, a method of vulcanizing at 150°C to 200°C for 10 to 30 minutes.

### [Application of tire]

The tire according to the present embodiment is appropriate as a tire for a passenger car, a heavy-duty tire, a tire for a large SUV, a motorcycle tire, etc. and can be used as a summer tire, a winter tire, or a studless tire for each of the above-described tires. In a case where the tire of the present embodiment is used as a motorcycle tire, a form of the motorcycle tire is not particularly limited and may be any of a pneumatic tire and a solid tire, and the tire of the present embodiment is preferably used as a pneumatic tire. Moreover, the tire of the present embodiment can also be used for any of various applications, such as an on-road tire, an off-road tire, a racing tire, and the like.

### EXAMPLES

Hereinafter, examples considered to be preferable in implementing the present invention (Examples) will be described, though the scope of the present invention is not limited to these Examples only. Tires each comprising a crown part and shoulder parts are examined which are obtained using various chemicals described below in accordance with compounding formulations in Table 1, and results calculated based on evaluation methods described below are shown in Table 2.

Various chemicals used in Examples and Comparative examples are collectively shown below.
SBR 1: Tufdene 3830 manufactured by Asahi Kasei Corporation (unmodified S-SBR, styrene content: 33% by mass, vinyl content: 34 mol%, comprising 37.5 parts by mass of an extending oil based on 100 parts by mass of a rubber solid content)
SBR 2: HPR350 manufactured by JSR Corporation (modified S-SBR, styrene content: 21% by mass, vinyl content: 56 mol%, non-oil extended)
BR: Ubepol BR (Registered Trademark) 150B manufactured by Ube Industries, Ltd. (cis content: 97% by mass, Mw: 440,000)
Carbon black: SHOW BLACK N110 manufactured by Cabot Japan K.K., (N₂SA: 142 m²/g)
Silica: Ultrasil VN3 manufactured by Evonik Degussa GmbH (N₂SA: 175 m²/g)
Silane coupling agent: Si69 manufactured by Evonik Degussa GmbH (bis(3-triethoxysilylpropyl)tetrasulfide)
Oil: Diana process NH-70S manufactured by Idemitsu Kosan Co., Ltd. (aromatic process oil)
Resin component: Sylvatraxx 4401 manufactured by Kraton Corporation (copolymer of α-methylstyrene and styrene, softening point: 85°C)
Wax: OZOACE 0355 manufactured by Nippon Seiro Co., Ltd. (paraffin wax)
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Ginrei R manufactured by TOHO ZINC CO., LTD.
Sulfur: HK-200-5 manufactured by Hosoi Chemical Industry Co., Ltd. (5% oil-containing powdered sulfur)
Vulcanization accelerator 1: Nocceler NS-G manufactured by Ouchi Shinko Chemical Industry Co., Ltd. (N-tert-butyl-2-benzothiazolyl sulfenamide (TBBS))
Vulcanization accelerator 2: Nocceler D manufactured by Ouchi Shinko Chemical Industry Co., Ltd. (1,3-diphenylguanidine (DPG))

### (Examples and Comparative examples)

According to the compounding formulations shown in Table 1, using a 1.7 L closed Banbury mixer, chemicals other than sulfur and a vulcanization accelerator are kneaded for 1 to 10 minutes until the temperature reaches a discharge temperature at 150 to 160°C, to obtain a kneaded product. Next, using a twin-screw open roll, sulfur and the vulcanization accelerator are added to the kneaded product, and the mixture is kneaded for 4 minutes until the temperature reaches 105°C, to obtain unvulcanized rubber compositions. The unvulcanized rubber compositions are molded into shapes of a crown part and shoulder parts of a tread part and attached together with other tire members to produce an unvulcanized tire, and the unvulcanized tire is vulcanized at 170°C, thereby obtaining each test tire listed in Table 2.

Each test tire has a basic structure of FIG. 1 and a basic pattern of FIG. 4 and is produced to have a size of 120/70ZR17 in a case where the tire is used as a front tire or a size of 180/55ZR17 in a case where the tire is used as a rear tire.

<Measurement of toluene swelling ratio>

For each vulcanized rubber test piece prepared by being cut out from each of a crown part and a shoulder part of each test tire, a mass of the vulcanized rubber test piece before and after immersing the vulcanized rubber test piece in toluene of 23°C for 24 hours is measured in accordance with JIS K 6258:2016, and a toluene swelling ratio is calculated using the following equation. It is shown that a smaller value of the toluene swelling ratio indicates a higher cross-link density. (Toluene swelling ratio) = {(Mass after immersion)/(Mass before immersion)}×100

### <Measurement of 70°C tan δ and tan δ peak temperature>

For each vulcanized rubber test piece prepared to have a length of 20 mm, a width of 4 mm, and a thickness of 1 mm by being cut out from each of a crown part and a shoulder part of each test tire such that a tire circumferential direction becomes a long side and a tire radial direction becomes a thickness direction, 70°C tan δ is measured using a dynamic viscoelasticity measuring device (for example, EPLEXOR series manufactured by gabo Systemtechnik GmbH) under a condition of a temperature at 70°C, a frequency of 10 Hz, an initial strain of 10%, a dynamic strain of ±1%, and an extension mode. Furthermore, a temperature distribution curve of tan δ in a range from -60°C to 40°C is measured under a condition of a frequency of 10 Hz, an initial strain of 10%, an amplitude of ±0.5%, and a temperature rising rate of 2°C/min, and the tan δ peak temperature is determined as a temperature corresponding to the largest value of tan δ in the obtained temperature distribution curve.

### <Measurement of 0°CE*>

For each vulcanized rubber test piece prepared to have a length of 20 mm, a width of 4 mm, and a thickness of 1 mm by being cut out from each of a crown part and a shoulder part of each test tire such that a tire circumferential direction becomes a long side and a tire radial direction becomes a thickness direction, 0°CE* is measured using a dynamic viscoelasticity measuring device (for example, EPLEXOR series manufactured by gabo Systemtechnik GmbH) under a condition of a temperature at 0°C, a frequency of 10 Hz, an initial strain of 10%, a dynamic strain of ±2.5%, and an extension mode.

### <Interfacial peeling resistance>

Each test tire is assembled to a standardized rim (front wheel: MT3.50×17, rear wheel: MT5.50×17) and mounted to a test vehicle (a motorcycle with a displacement of 750 cc (four cycle)). An air internal pressure is adjusted to be 250 kPa for a front tire and 290 kPa for a rear tire. This test vehicle is made run for 5000 km on a test course with a dry asphalt road surface, and a condition of peeling on an interface between a crown part and each shoulder part of a tread is visually evaluated. The evaluations are performed using an integer value of 1 to 5 points, and based on evaluation criteria that the higher the score is, the less the extent of interfacial peeling is, a total score by 20 panelists is calculated. A total score of the control tire (Comparative example 4) is converted into a reference value (100), and an evaluation result on each test tire is indicated as an index in proportion to the total score.

**Table 1**

| | A1 | A2 | A3 | A4 | A5 | A6 | A7 | A8 | A9 | A10 |
|---|---|---|---|---|---|---|---|---|---|---|
| Compounding amount (part by mass) | | | | | | | | | | |
| SBR 1 (Rubber solid content) | 137.5 (100) | 137.5 (100) | 137.5 (100) | 137.5 (100) | 137.5 (100) | 137.5 (100) | 82.5 (60) | 96.25 (70) | - | 137.5 (100) |
| SBR 2 | - | - | - | - | - | - | - | - | 100 | - |
| BR | - | - | - | - | - | - | 40 | 30 | - | - |
| Carbon black | 10 | 10 | 10 | 10 | 10 | 10 | 10 | 10 | 10 | 10 |
| Silica | 70 | 70 | 70 | 120 | 130 | 120 | 70 | 70 | 70 | 80 |
| Silane coupling agent | 5.6 | 5.6 | 5.6 | 9.6 | 10.4 | 9.6 | 5.6 | 5.6 | 5.6 | 6.4 |
| Oil | - | - | - | 30 | 35 | 30 | 15 | 11 | - | - |
| Resin component | 10 | 10 | 10 | 10 | 10 | 20 | 10 | 10 | 10 | 10 |
| Wax | 1.0 | 1.0 | 1.0 | 1.0 | 1.0 | 1.0 | 1.0 | 1.0 | 1.0 | 1.0 |
| Antioxidant | 1.0 | 1.0 | 1.0 | 1.0 | 1.0 | 1.0 | 1.0 | 1.0 | 1.0 | 1.0 |
| Stearic acid | 2.5 | 2.5 | 2.5 | 2.5 | 2.5 | 2.5 | 2.5 | 2.5 | 2.5 | 2.5 |
| Zinc oxide | 2.5 | 2.5 | 2.5 | 2.5 | 2.5 | 2.5 | 2.5 | 2.5 | 2.5 | 2.5 |
| Sulfur | 2.0 | 1.5 | 1.0 | 2.0 | 2.0 | 2.5 | 2.0 | 2.0 | 2.0 | 3.3 |
| Vulcanization accelerator 1 | 2.0 | 1.5 | 1.0 | 2.0 | 2.0 | 2.5 | 2.0 | 2.0 | 2.0 | 3.3 |
| Vulcanization accelerator 2 | 1.0 | 1.0 | 1.0 | 1.5 | 2.0 | 1.5 | 1.0 | 1.0 | 1.0 | 1.0 |
| Toluene swelling ratio (%) | 260 | 287 | 323 | 239 | 232 | 223 | 269 | 266 | 249 | 209 |
| 70°C tan δ | 0.14 | 0.16 | 0.19 | 0.26 | 0.28 | 0.26 | 0.16 | 0.16 | 0.13 | 0.14 |
| Tan δ peak temperature (°C) | -16 | -17 | -19 | -18 | -18 | -13 | -27 | -24 | -2 | -14 |
| 0°CE* (MPa) | 26 | 23 | 21 | 47 | 52 | 49 | 18 | 18 | 63 | 43 |

| | A11 | A12 | A13 | A14 | A15 | A16 | A17 | A18 | A19 | |
|---|---|---|---|---|---|---|---|---|---|---|
| Compounding amount (part by mass) | | | | | | | | | | |
| SBR 1 (Rubber solid content) | 137.5 (100) | 137.5 (100) | 137.5 (100) | 137.5 (100) | 137.5 (100) | 137.5 (100) | 137.5 (100) | 137.5 (100) | 96.25 (70) | |
| SBR 2 | - | - | - | - | - | - | - | - | - | |
| BR | - | - | - | - | - | - | - | - | 30 | |
| Carbon black | 10 | 80 | 80 | 80 | 100 | 100 | 10 | 50 | 80 | |
| Silica | 100 | - | - | - | - | - | 80 | 30 | - | |
| Silane coupling agent | 8.0 | - | - | - | - | - | 6.4 | 2.1 | - | |
| Oil | - | 5 | 5 | 5 | 10 | 10 | - | 5 | 5 | |
| Resin component | 10 | 10 | 10 | 10 | 10 | 10 | 10 | 10 | 10 | |
| Wax | 1.0 | 1.0 | 1.0 | 1.0 | 1.0 | 1.0 | 1.0 | 1.0 | 1.0 | |
| Antioxidant | 1.0 | 1.0 | 1.0 | 1.0 | 1.0 | 1.0 | 1.0 | 1.0 | 1.0 | |
| Stearic acid | 2.5 | 2.5 | 2.5 | 2.5 | 2.5 | 2.5 | 2.5 | 2.5 | 2.5 | |
| Zinc oxide | 2.5 | 2.5 | 2.5 | 2.5 | 2.5 | 2.5 | 2.5 | 2.5 | 2.5 | |
| Sulfur | 2.5 | 1.0 | 3.3 | 1.4 | 1.8 | 2.0 | 1.0 | 1.4 | 1.4 | |
| Vulcanization accelerator 1 | 2.5 | 0.7 | 3.3 | 1.2 | 1.6 | 1.8 | 0.7 | 1.2 | 1.2 | |
| Vulcanization accelerator 2 | 1.5 | - | - | - | - | - | 1.0 | - | - | |
| Toluene swelling ratio (%) | 214 | 347 | 224 | 313 | 273 | 262 | 325 | 322 | 308 | |
| 70°C tan δ | 0.19 | 0.30 | 0.18 | 0.26 | 0.31 | 0.30 | 0.23 | 0.21 | 0.27 | |
| Tan δ peak temperature (°C) | -16 | -25 | -18 | -23 | -24 | -23 | -20 | -22 | -33 | |
| 0°CE* (MPa) | 62 | 31 | 47 | 34 | 55 | 56 | 28 | 25 | 31 | |

**Table 2**

| | | Examp le | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Crown part | | | | | | | | | | | | |
| | Compounding | A1 | A2 | A3 | A4 | A5 | A6 | A7 | A8 | A9 | A1 | A10 |
| | S_{CR} | 260 | 287 | 323 | 239 | 232 | 223 | 269 | 266 | 249 | 260 | 209 |
| | 70°C tan δ_{CR} | 0.14 | 0.16 | 0.19 | 0.26 | 0.28 | 0.26 | 0.16 | 0.16 | 0.13 | 0.14 | 0.14 |
| | T_{CR} | -16 | -17 | -19 | -18 | -18 | -13 | -27 | -24 | -2 | -16 | -14 |
| | 0°CE*_{CR} (MPa) | 26 | 23 | 21 | 47 | 52 | 49 | 18 | 18 | 63 | 26 | 43 |
| Shoulder part | | | | | | | | | | | | |
| | Compounding | A14 | A15 | A16 | A14 | A14 | A14 | A14 | A14 | A14 | A14 | A14 |
| | S_{SH} | 313 | 273 | 262 | 313 | 313 | 313 | 313 | 313 | 313 | 313 | 313 |
| | 70°C tan δ_{SH} | 0.26 | 0.31 | 0.30 | 0.26 | 0.26 | 0.26 | 0.26 | 0.26 | 0.26 | 0.26 | 0.26 |
| | T_{SH} | -23 | -24 | -23 | -23 | -23 | -23 | -23 | -23 | -23 | -23 | -23 |
| | 0°CE*_{SH} (MPa) | 34 | 55 | 56 | 34 | 34 | 34 | 34 | 34 | 34 | 34 | 34 |

| Tire specification | | | | | | | | | | | | |
|---|---|---|---|---|---|---|---|---|---|---|---|---|
| | G (mm) | 10 | 10 | 10 | 10 | 10 | 10 | 10 | 10 | 10 | 12 | 10 |
| | D (mm) | 8.0 | 8.0 | 8.0 | 8.0 | 8.0 | 8.0 | 8.0 | 8.0 | 8.0 | 8.0 | 8.0 |
| | W (mm) | 4.0 | 4.0 | 4.0 | 4.0 | 4.0 | 4.0 | 4.0 | 4.0 | 4.0 | 4.0 | 4.0 |
| S_{SH}/S_{CR} | | 1.20 | 0.95 | 0.81 | 1.31 | 1.35 | 1.40 | 1.16 | 1.18 | 1.26 | 1.20 | 1.50 |
| (S_{SH}/S_{CR})xG | | 12.0 | 9.5 | 8.1 | 13.1 | 13.5 | 14.0 | 11.6 | 11.8 | 12.6 | 14.4 | 15.0 |
| (S_{SH}/S_{CR})×D | | 9.6 | 7.6 | 6.5 | 10.5 | 10.8 | 11.2 | 9.3 | 9.4 | 10.1 | 9.6 | 12.0 |
| W/(S_{SH}/S_{CR}) | | 3.3 | 4.2 | 4.9 | 3.1 | 3.0 | 2.8 | 3.4 | 3.4 | 3.2 | 3.3 | 2.7 |
| 70°C tan δ_{SH}/70°C tan δ_{CR} | | 1.9 | 1.9 | 1.6 | 1.0 | 0.9 | 1.0 | 1.6 | 1.6 | 2.0 | 1.9 | 1.9 |
| D×70°C tan δ_{SH} | | 2.1 | 2.5 | 2.4 | 2.1 | 2.1 | 2.1 | 2.1 | 2.1 | 2.1 | 2.1 | 2.1 |
| W×70°C tan δ_{sH} | | 1.0 | 1.2 | 1.2 | 1.0 | 1.0 | 1.0 | 1.0 | 1.0 | 1.0 | 1.0 | 1.0 |
| 0°CE*_{SH}/0°CE*_{CR} | | 1.3 | 2.4 | 2.7 | 0.7 | 0.7 | 0.7 | 1.9 | 1.9 | 0.5 | 1.3 | 0.8 |

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | |
| Interfacial peeling resistance | 120 | 138 | 110 | 116 | 110 | 106 | 112 | 116 | 124 | 112 | 102 | |

| | | Example | | | | Comparative example | | | | | | |
|---|---|---|---|---|---|---|---|---|---|---|---|---|
| | | 12 | 13 | 14 | 1 | 2 | 3 | 4 | 5 | 6 | 7 | 8 |
| Crown part | | | | | | | | | | | | |
| | Compounding | A1 | A1 | A1 | A10 | A11 | A1 | A12 | A13 | A10 | A13 | A13 |
| | S_{CR} | 260 | 260 | 260 | 209 | 214 | 260 | 347 | 224 | 209 | 224 | 224 |
| | 70°C tan δ_{CR} | 0.14 | 0.14 | 0.14 | 0.14 | 0.19 | 0.14 | 0.30 | 0.18 | 0.14 | 0.18 | 0.18 |
| | Tcr | -16 | -16 | -16 | -14 | -16 | -16 | -25 | -18 | -14 | -18 | -18 |
| | 0°CE*_{CR} (MPa) | 26 | 26 | 26 | 43 | 62 | 26 | 31 | 47 | 43 | 47 | 47 |

| Shoulder part | | | | | | | | | | | | |
|---|---|---|---|---|---|---|---|---|---|---|---|---|
| | Compounding | A18 | A19 | A18 | A12 | A12 | A14 | A11 | A3 | A17 | A12 | A3 |
| | S_{SH} | 322 | 308 | 322 | 347 | 347 | 313 | 214 | 323 | 325 | 347 | 323 |
| | 70°C tan δ_{SH} | 0.21 | 0.27 | 0.21 | 0.30 | 0.30 | 0.26 | 0.19 | 0.19 | 0.23 | 0.30 | 0.19 |
| | T_{SH} | -22 | -33 | -22 | -25 | -25 | -23 | -16 | -19 | -20 | -25 | -19 |
| | 0°CE*_{SH} (MPa) | 25 | 31 | 25 | 31 | 31 | 34 | 62 | 21 | 28 | 31 | 21 |

| Tire specification | | | | | | | | | | | | |
|---|---|---|---|---|---|---|---|---|---|---|---|---|
| | G (mm) | 10 | 10 | 10 | 10 | 10 | 13 | 13 | 10 | 10 | 10 | 13 |
| | D (mm) | 8.0 | 8.0 | 9.0 | 8.0 | 8.0 | 8.0 | 8.0 | 8.0 | 8.0 | 8.0 | 8.0 |
| | W (mm) | 4.0 | 4.0 | 6.0 | 4.0 | 4.0 | 4.0 | 4.0 | 4.0 | 4.0 | 4.0 | 4.0 |
| S_{SH}/S_{CR} | | 1.24 | 1.18 | 1.24 | 1.66 | 1.62 | 1.20 | 0.62 | 1.44 | 1.56 | 1.55 | 1.44 |
| (S_{SH}/S_{CR})×G | | 12.4 | 11.8 | 12.4 | 16.6 | 16.2 | 15.6 | 8.0 | 14.4 | 15.6 | 15.5 | 18.7 |
| (S_{SH}/S_{CR})×D | | 9.9 | 9.5 | 11.1 | 13.3 | 13.0 | 9.6 | 4.9 | 11.5 | 12.4 | 12.4 | 11.5 |
| W/(S_{SH}/S_{CR}) | | 3.2 | 3.4 | 4.8 | 2.4 | 2.5 | 3.3 | 6.5 | 2.8 | 2.6 | 2.6 | 2.8 |
| 70°C tan δ_{SH}/70°C tan δ_{CR} | | 1.5 | 1.9 | 1.5 | 2.1 | 1.6 | 1.9 | 0.6 | 1.1 | 1.6 | 1.7 | 1.1 |
| D×70°C tan δ_{SH} | | 1.7 | 2.2 | 1.9 | 2.4 | 2.4 | 2.1 | 1.5 | 1.5 | 1.8 | 2.4 | 1.5 |
| W×70°C tan δ_{SH} | | 0.8 | 1.1 | 1.3 | 1.2 | 1.2 | 1.0 | 0.8 | 0.8 | 0.9 | 1.2 | 0.8 |
| 0°CE*_{SH}/0°CE*_{CR} | | 1.0 | 1.2 | 1.0 | 0.7 | 0.5 | 1.3 | 2.0 | 0.4 | 0.7 | 0.7 | 0.4 |
| Interfacial peeling resistance | | 114 | 122 | 126 | 98 | 96 | 94 | 100 | 96 | 92 | 96 | 94 |

### <Embodiments>

Preferred embodiments are described below.
[1] A tire comprising a tread part,
   wherein a tread surface of the tread part comprises a plurality of grooves,
   wherein the tread part comprises
      a crown part located in the center in a tire width direction, and
      a pair of shoulder parts located on outer sides of the crown part in the tire width direction,
   wherein each of the crown part and the shoulder parts is composed of a rubber composition comprising a rubber component and a filler,
   wherein the rubber composition constituting the crown part comprises 70 parts by mass or more, preferably 75 parts by mass or more, more preferably 80 parts by mass or more, further preferably 90 parts by mass or more, particularly preferably 100 parts by mass or more, and preferably 140 parts by mass or less, more preferably 130 parts by mass or less, of silica based on 100 parts by mass of the rubber component,
   wherein a content of carbon black in the filler contained in the rubber composition constituting the shoulder parts is 50% by mass or more, preferably 60% by mass or more, more preferably 70% by mass or more, further preferably 80% by mass or more, particularly preferably 85% by mass or more, and
   wherein a product of S_{SH}/S_{CR} and G ((S_{SH}/S_{CR})×G) is 15.0 or less, preferably 14.8 or less, more preferably 14.6 or less, further preferably 14.4 or less, particularly preferably 14.2 or less,
   where a toluene swelling ratio of the rubber composition constituting the crown part is referred to as S_{CR}, in %, a toluene swelling ratio of the rubber composition constituting the shoulder parts is referred to as S_{SH}, in %, and a thickness of the tread is referred to as G, in mm.
[2] The tire of [1] above, wherein S_{SH}/S_{CR} is greater than 0.75, more preferably greater than 0.80, further preferably greater than 0.85, particularly preferably greater than 0.90, and less than 1.40, more preferably less than 1.35, further preferably less than 1.30.
[3] The tire of [1] or [2] above, wherein a content of silica based on 100 parts by mass of the rubber component in the rubber composition constituting the crown part is 120 parts by mass or less.
[4] The tire of any one of [1] to [3] above, wherein each of the rubber composition constituting the crown part and the rubber composition constituting the shoulder parts comprises 2 parts by mass or more, more preferably 10 parts by mass or more, further preferably 20 parts by mass or more, further preferably 30 parts by mass or more, particularly preferably 40 parts by mass or more, and 120 parts by mass or less, preferably 100 parts by mass or less, more preferably 90 parts by mass or less, further preferably 85 parts by mass or less of a softening agent based on 100% by mass of the rubber component.
[5] The tire of any one of [1] to [4] above, wherein the rubber component contained in the rubber composition constituting the shoulder parts comprises 50% by mass or more, preferably 60% by mass or more, more preferably 70% by mass or more, further preferably 75% by mass or more, of a styrene-butadiene rubber.
[6] The tire of any one of [1] to [5] above, wherein at least one of the rubber component contained in the rubber composition constituting the crown part and the rubber component contained in the rubber composition constituting the shoulder parts comprises a modified styrene-butadiene rubber.
[7] The tire of any one of [1] to [6] above, wherein a product of S_{SH}/S_{CR} and D ((S_{SH}/S_{CR})×D) is 12.0 or less, more preferably 11.5 or less, further preferably 11.0 or less, where a groove depth of a groove having the maximum groove depth among the plurality of grooves is referred to as D, in mm.
[8] The tire of any one of [1] to [7] above, wherein a ratio of W to S_{SH}/S_{CR} (W/(S_{SH}/S_{CR})) is 2.2 or more, preferably 2.5 or more, more preferably 2.8 or more, where a groove width of a groove having the maximum groove width among the plurality of grooves is referred to as W, in mm.
[9] The tire of any one of [1] to [8] above, wherein 70°C tan δ_{SH}/70°C tan δ_{CR} is greater than 1.0, preferably greater than 1.1, more preferably greater than 1.2, where a tan δ at 70°C of the rubber composition constituting the crown part is referred to as 70°C tan δ_{CR} and a tan δ at 70°C of the rubber composition constituting the shoulder parts is referred to as 70°C tan δ_{SH}.
[10] The tire of [9] above, wherein a product of D and 70°C tan δ_{SH} (D×70°C tan δ_{SH}) is greater than 1.5, preferably greater than 1.6, more preferably greater than 1.7, further preferably greater than 1.8, where a groove depth of a groove having the maximum groove depth among the plurality of grooves is referred to as D, in mm.
[11] The tire of [9] or [10] above, wherein a product of W and 70°C tan δ_{SH} (W×70°C tan δ_{SH}) is greater than 1.0, preferably greater than 1.1, where a groove width of a groove having the maximum groove width among the plurality of grooves is referred to as W, in mm.
[12] The tire of any one of [1] to [11] above, wherein the grooves straddle boundaries between the crown part and the shoulder parts and do not straddle a tire equatorial line.
[13] The tire of any one of [1] to [12] above, wherein a tan δ peak temperature T_{CR}, in °C, of the rubber composition constituting the crown part is lower than a tan δ peak temperature T_{SH}, in °C, of the rubber composition constituting the shoulder parts.
[14] The tire of any one of [1] to [13] above, wherein 0°CE*_{SH}/0°CE*_{CR} is less than 3.0, preferably less than 2.8, more preferably less than 2.6, further preferably less than 2.5, where a complex elastic modulus at 0°C of the rubber composition constituting the crown part is referred to as 0°CE*_{CR}, in MPa, and a complex elastic modulus at 0°C of the rubber composition constituting the shoulder parts is referred to as 0°CE*_{SH}, in MPa.
[15] The tire of any one of [1] to [14] above, wherein the tire is a motorcycle tire.

### REFERENCE SIGNS LIST

- 1: Tire
- 2: Tread part
- 2A: Tread surface
- 2e: Tread edge
- 3: Sidewall part
- 4: Bead part
- 5: Bead core
- 6: Carcass
- 7: Belt layer
- 8: Tread rubber
- 8A: Crown part
- 8B: Shoulder parts
- 9: Groove
- 9A: Main groove
- 9B: Sub groove
- 100: Road surface
- C: Tire equatorial line
- X: Width of ground-contacting surface
- TW: Curve length of entire tread part in width direction
- R: Tire rotation direction

## Claims

1. A tire comprising a tread part,
wherein a tread surface of the tread part comprises a plurality of grooves,
wherein the tread part comprises
a crown part located in the center in a tire width direction, and
a pair of shoulder parts located on outer sides of the crown part in the tire width direction,
wherein each of the crown part and the shoulder parts is composed of a rubber composition comprising a rubber component and a filler,
wherein the rubber composition constituting the crown part comprises 70 parts by mass or more of silica based on 100 parts by mass of the rubber component,
wherein a content of carbon black in the filler contained in the rubber composition constituting the shoulder parts is 50% by mass or more, and
wherein a product of S_{SH}/S_{CR} and G ((S_{SH}/S_{CR})×G) is 15.0 or less, where a toluene swelling ratio of the rubber composition constituting the crown part is referred to as S_{CR}, in %, a toluene swelling ratio of the rubber composition constituting the shoulder parts is referred to as S_{SH}, in %, and a thickness of the tread is referred to as G, in mm,
when the toluene swelling ratio is measured from a vulcanized rubber test piece prepared by being cut out from each of a crown part and a shoulder part of a test tire, a mass of the vulcanized rubber test piece before and after immersing the vulcanized rubber test piece in toluene of 23°C for 24 hours is measured in accordance with JIS K 6258:2016, and a toluene swelling ratio is calculated using the following equation: (Toluene swelling ratio) = {(Mass after immersion)/(Mass before immersion)}×100.

2. The tire of claim 1, wherein S_{SH}/S_{CR} is greater than 0.75 and less than 1.40.

3. The tire of claim 1 or 2, wherein a content of silica based on 100 parts by mass of the rubber component in the rubber composition constituting the crown part is 120 parts by mass or less.

4. The tire of any one of claims 1-3, wherein each of the rubber composition constituting the crown part and the rubber composition constituting the shoulder parts comprises 2 parts by mass or more and 85 parts by mass or less of a softening agent based on 100% by mass of the rubber component.

5. The tire of any one of claims 1-4, wherein the rubber component contained in the rubber composition constituting the shoulder parts comprises 70% by mass or more of a styrene-butadiene rubber.

6. The tire of any one of claims 1-5, wherein at least one of the rubber component contained in the rubber composition constituting the crown part and the rubber component contained in the rubber composition constituting the shoulder parts comprises a modified styrene-butadiene rubber.

7. The tire of any one of claims 1-6, wherein a product of S_{SH}/S_{CR} and D ((S_{SH}/S_{CR})×D) is 12.0 or less, where a groove depth of a groove having the maximum groove depth among the plurality of grooves is referred to as D, in mm.

8. The tire of any one of claims 1-7, wherein a ratio of W to S_{SH}/S_{CR} (W/(S_{SH}/S_{CR})) is 2.5 or more, where a groove width of a groove having the maximum groove width among the plurality of grooves is referred to as W, in mm.

9. The tire of any one of claims 1-8, wherein 70°C tan δ_{SH}/70°C tan δ_{CR} is greater than 1.0, where a tan δ at 70°C of the rubber composition constituting the crown part is referred to as 70°C tan δ_{CR} and a tan δ at 70°C of the rubber composition constituting the shoulder parts is referred to as 70°C tan δ_{SH},
when the 70°C tan δ is measured from a vulcanized rubber test piece prepared to have a length of 20 mm, a width of 4 mm, and a thickness of 1 mm by being cut out from each of a crown part and a shoulder part of the tire such that a tire circumferential direction becomes a long side and a tire radial direction becomes a thickness direction, using a dynamic viscoelasticity measuring device under a condition of a temperature at 70°C, a frequency of 10 Hz, an initial strain of 10%, a dynamic strain of ±1%, and an extension mode.

10. The tire of claim 9, wherein a product of D and 70°C tan δ_{SH} (D×70°C tan δ_{SH}) is greater than 1.5, where a groove depth of a groove having the maximum groove depth among the plurality of grooves is referred to as D, in mm.

11. The tire of claim 9 or 10, wherein a product of W and 70°C tan δ_{SH} (W×70°C tan δ_{SH}) is greater than 1.0, where a groove width of a groove having the maximum groove width among the plurality of grooves is referred to as W, in mm.

12. The tire of any one of claims 1-11, wherein the plurality of grooves straddle boundaries between the crown part and the shoulder parts and do not straddle a tire equatorial line.

13. The tire of any one of claims 1-12, wherein a tan δ peak temperature T_{CR}, in °C, of the rubber composition constituting the crown part is lower than a tan δ peak temperature T_{SH}, in °C, of the rubber composition constituting the shoulder parts.

14. The tire of any one of claims 1-13, wherein 0°CE*_{SH}/0°CE*_{CR} is less than 2.5, where a complex elastic modulus at 0°C of the rubber composition constituting the crown part is referred to as 0°CE*_{CR}, in MPa, and a complex elastic modulus at 0°C of the rubber composition constituting the shoulder parts is referred to as 0°CE*_{SH}, in MPa.

15. The tire of any one of claims 1-14, wherein the tire is a motorcycle tire.

## Patentansprüche

1. Reifen, umfassend einen Laufstreifenteil,
wobei eine Laufstreifenoberfläche des Laufstreifenteils eine Mehrzahl an Rillen umfasst,
wobei der Laufstreifenteil umfasst:
einen Kronenteil, der sich im Zentrum in einer Reifenbreitenrichtung befindet, und
ein Paar von Schulterteilen, die sich auf äußeren Seiten des Kronenteils in der Reifenbreitenrichtung befinden,
wobei jeder von dem Kronenteil und den Schulterteilen mit einer Kautschukzusammensetzung aufgebaut ist, die eine Kautschukkomponente und einen Füllstoff umfasst,
wobei die Kautschukzusammensetzung, die den Kronenteil bildet, 70 Massenteile oder mehr an Siliziumdioxid umfasst, bezogen auf 100 Massenteile der Kautschukkomponente,
wobei ein Gehalt an Ruß in dem Füllstoff, der in der Kautschukzusammensetzung enthalten ist, welche die Schulterteile bildet, 50 Massen-% oder mehr beträgt, und
wobei ein Produkt von S_{SH}/S_{CR} und G ((S_{SH}/S_{CR})×G) 15,0 oder weniger beträgt, worin ein Toluol-Quellungsverhältnis der Kautschukzusammensetzung, die den Kronenteil bildet, als S_{CR}, in %, bezeichnet ist, ein Toluol-Quellungsverhältnis der Kautschukzusammensetzung, welche die Schulterteile bildet, als S_{SH}, in %, bezeichnet ist, und eine Dicke des Laufstreifens als G, in mm, bezeichnet ist,
wenn das Toluol-Quellungsverhältnis an einem vulkanisierten Kautschuk-Prüfkörper gemessen wird, der hergestellt wird, indem er aus jedem von einem Kronenteil und einem Schulterteil eines Prüfreifens herausgeschnitten wird, eine Masse des vulkanisierten Kautschuk-Prüfkörpers vor und nach Eintauchen des vulkanisierten Kautschuk-Prüfkörpers in Toluol von 23°C für 24 Stunden gemäß JIS K 6258:2016 gemessen wird, und ein Toluol-Quellungsverhältnis unter Verwendung der folgenden Gleichung berechnet wird: (Toluol-Quellungsverhältnis) = {(Masse nach Eintauchen)/(Masse vor Eintauchen)}×100.

2. Reifen nach Anspruch 1, wobei S_{SH}/S_{CR} größer als 0,75 und kleiner als 1,40 ist.

3. Reifen nach Anspruch 1 oder 2, wobei an Gehalt an Siliziumdioxid bezogen auf 100 Massenteile der Kautschukkomponente in der Kautschukzusammensetzung, die den Kronenteil bildet, 120 Massenteile oder weniger beträgt.

4. Reifen nach einem der Ansprüche 1 bis 3, wobei jede von der Kautschukzusammensetzung, die den Kronenteil bildet, und der Kautschukzusammensetzung, welche die Schulterteile bildet, 2 Massenteile oder mehr und 85 Massenteile oder weniger eines Weichmachers bezogen auf 100 Massen-% der Kautschukkomponente umfasst.

5. Reifen nach einem der Ansprüche 1 bis 4, wobei die Kautschuckomponente, die in der Kautschukzusammensetzung enthalten ist, welche die Schulterteile bildet, 70 Massen-% oder mehr eines Styrol-Butadien-Kautschuks umfasst.

6. Reifen nach einem der Ansprüche 1 bis 5, wobei mindestens eine von der Kautschukkomponente, die in der Kautschukzusammensetzung enthalten ist, die den Kronenteil bildet, und der Kautschukkomponente, die in der Kautschukzusammensetzung enthalten ist, welche die Schulterteile bildet, einen modifizierten Styrol-Butadien-Kautschuk umfasst.

7. Reifen nach einem der Ansprüche 1 bis 6, wobei ein Produkt von S_{SH}/S_{CR} und D ((S_{SH}/S_{CR})×D) 12,0 oder weniger beträgt, worin eine Rillentiefe einer Rille, welche unter der Mehrzahl an Rillen die maximale Rillentiefe aufweist, als D, in mm, bezeichnet ist.

8. Reifen nach einem der Ansprüche 1 bis 7, wobei eine Verhältnis von W zu S_{SH}/S_{CR} (W/(S_{SH}/S_{CR})) 2,5 oder mehr beträgt, worin eine Rillenbreite einer Rille, welche unter der Mehrzahl an Rillen die maximale Rillenbreite aufweist, als W, in mm, bezeichnet ist.

9. Reifen nach einem der Ansprüche 1 bis 8, wobei 70°C tan S_{SH}/70°C tan δ_{CR} größer als 1,0 ist, worin ein tan δ bei 70°C der Kautschukzusammensetzung, die den Kronenteil bildet, als 70°C tan δ_{CR} bezeichnet ist, und ein tan δ bei 70°C der Kautschukzusammensetzung, welche die Schulterteile bildet, als 70°C tan δ_{SH} bezeichnet ist,
wenn der 70°C tan δ an einem vulkanisierten Kautschuk-Prüfkörper, der hergestellt wird, um eine Länge von 20 mm, eine Breite von 4 mm und eine Dicke von 1 mm aufzuweisen, indem er aus jedem von einem Kronenteil und einem Schulterteil des Reifens so herausgeschnitten wird, dass eine Reifenumfangsrichtung eine lange Seite wird und eine Reifenradialrichtung eine Dickenrichtung wird, unter Verwendung einer Messvorrichtung für dynamische Viskoelastizität unter Bedingungen einer Temperatur bei 70°C, einer Frequenz von 10 Hz, einer anfänglichen Dehnung von 10%, einer dynamischen Dehnung von ±1% und eines Streckungsmodus gemessen wird.

10. Reifen nach Anspruch 9, wobei ein Produkt von D und 70°C tan δ_{SH} (D×70°C tan δ_{SH}) größer als 1,5 ist, worin eine Rillentiefe einer Rille, die unter der Mehrzahl an Rillen die maximale Rillentiefe aufweist, als D, in mm, bezeichnet ist.

11. Reifen nach Anspruch 9 oder 10, wobei ein Produkt von W und 70°C tan δ_{SH} (W×70°C tan δ_{SH}) größer als 1,0 ist, worin eine Rillenbreite einer Rille, die unter der Mehrzahl an Rillen die maximale Rillenbreite aufweist, als W, in mm, bezeichnet ist.

12. Reifen nach einem der Ansprüche 1 bis 11, wobei die Mehrzahl an Rillen Grenzen zwischen dem Kronenteil und den Schulterteilen überqueren und eine Reifenäquatorlinie nicht überqueren.

13. Reifen nach einem der Ansprüche 1 bis 12, wobei eine tan δ-Peak-Temperatur T_{CR}, in °C, der Kautschukzusammensetzung, die den Kronenteil bildet, niedriger ist als eine tan δ-Peak-Temperatur T_{SH}, in °C, der Kautschukzusammensetzung, welche die Schulterteile bildet.

14. Reifen nach einem der Ansprüche 1 bis 13, wobei 0°CE*_{SH}/0°CE*_{CR} weniger als 2,5 beträgt, worin ein komplexer Elastizitätsmodul bei 0°C der Kautschukzusammensetzung, die den Kronenteil bildet, als 0°CE*_{CR}, in MPa, bezeichnet ist, und ein komplexer Elastizitätsmodul bei 0°C der Kautschukzusammensetzung, welche die Schulterteile bildet, als 0°CE*_{SH}, in MPa, bezeichnet ist.

15. Reifen nach einem der Ansprüche 1 bis 14, wobei der Reifen ein Motorradreifen ist.

## Revendications

1. Pneumatique comprenant une partie bande de roulement,
dans lequel une surface de bande de roulement de la partie bande de roulement comprend une pluralité de rainures,
dans lequel la partie bande de roulement comprend
une partie en couronne située au centre dans une direction de la largeur du pneumatique et
une paire de parties d'épaulement situées sur des côtés extérieurs de la partie en couronne dans la direction de la largeur du pneumatique,
dans lequel chacune parmi la partie en couronne et les parties d'épaulement est composée d'une composition de caoutchouc comprenant un composant de caoutchouc et une charge,
dans lequel la composition de caoutchouc constituant la partie en couronne comprend 70 parties en masse ou plus de silice sur la base de 100 parties en masse de composant de caoutchouc,
dans lequel une teneur en noir de carbone dans la charge contenue dans la composition de caoutchouc constituant les parties d'épaulement est égale ou supérieure à 50 % en masse, et
dans lequel un produit de S_{SH}/S_{CR} par G ((S_{SH} S_{CR})× G) est inférieur ou égal à 15,0, où un ratio de gonflement dans le toluène de la composition de caoutchouc constituant la partie en couronne est représentée par S_{CR}, en %, un ratio de gonflement dans le toluène de la composition de caoutchouc constituant les parties d'épaulement est représenté par S_{SH}, en %, et une épaisseur de la bande de roulement est représentée par G, en mm, lorsque le ratio de gonflement dans le toluène est mesuré à partir d'un échantillon de test en caoutchouc vulcanisé préparé en étant découpé à partir de chacune parmi une partie en couronne et une partie d'épaulement d'un pneumatique testé, une masse de l'échantillon de test en caoutchouc vulcanisé avant et après immersion de l'échantillon de test en caoutchouc vulcanisé dans du toluène à 23 °C pendant 24 heures est mesurée selon la norme JIS K 6258:2016 et un ratio de gonflement dans le toluène est calculé en utilisant l'équation suivante : (Ratio de gonflement dans le toluène) = {(Masse après immersion)/ (Masse avant immersion)} ×100.

2. Pneumatique selon la revendication 1, dans lequel S_{SH}/S_{CR} est supérieur à 0,75 et inférieur à 1,40.

3. Pneumatique selon la revendication 1 ou la revendication 2, dans lequel une teneur en silice sur la base de 100 parties en masse de composant de caoutchouc dans la composition de caoutchouc constituant la partie en couronne est inférieure ou égale à 120 parties en masse.

4. Pneumatique selon l'une quelconque des revendications 1 à 3, dans lequel chacune parmi la composition de caoutchouc constituant la partie en couronne et la composition de caoutchouc constituant les parties d'épaulement comprend 2 parties en masse ou plus et 85 parties en masse ou moins d'un agent apportant de la souplesse sur la base de 100 % en masse de composant de caoutchouc.

5. Pneumatique selon l'une quelconque des revendications 1 à 4, dans lequel le composant de caoutchouc contenu dans la composition de caoutchouc constituant les parties d'épaulement comprend 70 % en masse ou plus de caoutchouc styrène butadiène.

6. Pneumatique selon l'une quelconque des revendications 1 à 5, dans lequel au moins un parmi le composant de caoutchouc contenu dans la composition de caoutchouc constituant la partie en couronne et le composant de caoutchouc contenu dans la composition de caoutchouc constituant les parties d'épaulement comprend un caoutchouc styrène butadiène modifié.

7. Pneumatique selon l'une quelconque des revendications 1 à 6, dans lequel un produit de S_{SH}/S_{CR} par D ((S_{SH}/S_{CR}) × D) est inférieur ou égal à 12,0, là où une profondeur de rainure d'une rainure ayant la profondeur de rainure maximale parmi la pluralité des rainures est représentée par D, en mm.

8. Pneumatique selon l'une quelconque des revendications 1 à 7, dans lequel un ratio de W sur S_{SH}/S_{CR} (W/(S_{SH}/S_{CR})) est égal ou supérieur à 2,5, là où une largeur de rainure d'une rainure ayant la largeur de rainure maximale parmi la pluralité des rainures est représentée par W, en mm.

9. Pneumatique selon l'une quelconque des revendications 1 à 8, dans lequel tan δ_{SH} à 70 °C/tan δ_{CR} à 70 °C est supérieur à 1,0, là où tan δ à 70 °C de la composition de caoutchouc constituant la partie en couronne est représentée par tan δ_{CR} à 70 °C et une tan δ à 70 °C de la composition de caoutchouc constituant les parties d'épaulement est représentée par tan δ_{SH} à 70 °C,
lorsque tan δ à 70 °C est mesurée à partir d'un échantillon de test en caoutchouc vulcanisé préparé pour avoir une longueur de 20 mm, une largeur de 4 mm et une épaisseur de 1 mm en étant découpé à partir de chacune parmi la partie en couronne et une partie d'épaulement du pneumatique de sorte qu'une direction circonférentielle de pneumatique devient un côté allongé et une direction radiale de pneumatique devient une direction d'épaisseur, en utilisant un dispositif de mesure de viscoélasticité dynamique dans des conditions de température de 70 °C, de fréquence de 10 Hz, de contrainte initiale de 10 %, de contrainte dynamique de ± 1 %, et en mode extension.

10. Pneumatique selon la revendication 9, dans lequel un produit de D par tan δ_{SH} à 70 °C (D × tan δ_{SH} à 70 °C) est supérieur à 1,5, là où une profondeur de rainure d'une rainure ayant la profondeur de rainure maximale parmi la pluralité des rainures est représentée par D, en mm.

11. Pneumatique selon la revendication 9 ou la revendication 10, dans lequel un produit de W par tan δ_{SH} à 70 °C (W × tan δ_{SH} à 70 °C) est supérieur à 1,0, là où une largeur de rainure d'une rainure ayant la largeur de rainure maximale parmi la pluralité des rainures est représentée par W, en mm.

12. Pneumatique selon l'une quelconque des revendications 1 à 11, dans lequel la pluralité des rainures se chevauche avec des limites entre la partie en couronne et les parties d'épaulement et ne se chevauchent pas avec une ligne équatoriale du pneumatique.

13. Pneumatique selon l'une quelconque des revendications 1 à 12, dans lequel un pic de température de tan δ T_{CR}, en °C, de la composition de caoutchouc constituant la partie en couronne est inférieur à un pic de température de tan δ T_{SH}, en °C, de la composition de caoutchouc constituant les parties d'épaulement.

14. Pneumatique selon l'une quelconque des revendications 1 à 13, dans lequel E*_{SH} à 0 °C/E*_{CR} à 0 °C est inférieur à 2,5, là où un module élastique complexe à 0 °C de la composition de caoutchouc constituant la partie en couronne est représenté par E*_{CR} à 0 °C, en MPa, et un module élastique complexe à 0 °C de la composition de caoutchouc constituant les parties d'épaulement est représenté par E*_{SH} à 0 °C, en MPa.

15. Pneumatique selon l'une quelconque des revendications 1 à14, dans lequel le pneumatique est un pneumatique de motocyclette.
